# EUROPEAN PATENT SPECIFICATION

(11) **EP 4 342 216 B1**
(45) Date of publication and mention of the grant of the patent: **25.11.2026**
(21) Application number: 22734721.8
(22) Date of filing: 19.05.2022
(51) Int. Cl.: H04W 24/10, H04W 76/27

(54) **QUALITY OF EXPERIENCE MEASUREMENT IN INACTIVE STATE**
MESSUNG DER ERFAHRUNGSQUALITÄT IM INAKTIVEN ZUSTAND
MESURE DE QUALITÉ D'EXPÉRIENCE DANS UN ÉTAT INACTIF

(30) Priority: 21.05.2021 US 202163191762 P
(43) Date of publication of application: 27.03.2024
(73) Proprietor: TOYOTA JIDOSHA KABUSHIKI KAISHA, Toyota-shi, Aichi-ken, 471-8571 (JP)
(72) Inventor: BABAEI, Alireza, Fairfax, VA 22032 (US)
(74) Representative: Cabinet Beau de Loménie
(86) International application number: PCT/US2022/029953
(87) International publication number: WO 2022/246016

(56) References cited:
- WO-A1-2018/142345
- WO-A1-2020/150952
- WO-A1-2020/167205
- WO-A1-2020/180226
- WO-A1-2020/199972
- WO-A1-2021/023280
- WO-A1-2021/067149
- US-A1- 2021 051 505
- US-A1- 2021 345 144
- US-A1- 2022 150 739
- US-A1- 2022 158 781
- US-A1- 2022 182 859

## Description

### BACKGROUND OF THE INVENTION

The present invention is directed to 5G, which is the 5^{th} generation mobile network. It is a new global wireless standard after 1G, 2G, 3G, and 4G networks. 5G enables networks designed to connect machines, objects and devices.

The invention is more specifically directed to Quality of Experience (QoE) measurement and reporting, that is, QoE mechanisms that support QoE measurements during the RRC inactive state, i.e., enable and enhance processes for the QoE measurement during the RRC inactive state.

WO 2020/199972 A1 discloses a communication method, where a terminal device obtains - via an RCC release message - measurement configuration information. The measurement configuration information indicates a target frequency for which logged MDT measurement is performed by the terminal device, and the terminal device performs the logged MDT measurement for the target frequency. Thereby, network quality can be evaluated in a 5G communications system or a future communications system.

WO 2020/167205 A1 discloses systems and methods related to early measurement reporting. For example, a method performed by a wireless device in a cellular communications system comprises transmitting measurements with a first message to a network node. The first message is a request to resume a connection of the wireless device with a target cell, and the measurements are measurements performed by the wireless device while in a dormant state. Embodiments of a method of operation of a wireless device for reception of a request for early measurements in association with a paging message are also disclosed.

WO 2020/150952 A1 discloses methods, systems, and devices for wireless communications are described. For example, a user equipment (UE) may identify that the UE is operating in a dual-connectivity configuration with a master node (MN) and a secondary node (SN). The UE may receive at least one request that the UE report MDT measurements. The UE may perform a first portion of measurements associated with the first base station and perform a second portion of measurements associated with the second base station. The UE may perform the measurements while the UE is operating in the dual-connectivity configuration. The UE may transmit one or more reports including information indicative of the first portion of measurements, information indicative of the second portion of measurements, or both.

WO 2020/180226 A1 discloses systems and methods for handling measurement configurations for a power saving state and/or handling associated measurements, upon receiving a message from a network node while performing measurements in accordance with the measurement configurations while in the power saving state. For example, a method performed by a wireless device in a cellular communications system comprises receiving at least one measurement configuration for a power saving state and performing measurements in the power saving state in accordance with the at least one measurement configuration. The method further comprises, while performing the measurements in the power saving state, receiving a message from a network node and performing one or more actions to handle the at least one measurement configuration, the measurements, or both the measurement configuration and the measurements, upon receiving the message.

WO 2021/023280 A1 discloses a communication method that comprises: a first access network device determining that a second access network device can send measurement configuration to a terminal device; the first access network device sending first indication information to the second access network device, the first indication information indicating that the second access network device can send the measurement configuration to the terminal device, both the first access network device and the second access network device providing services for the terminal device, and the measurement configuration comprising minimization of drive test (MDT) measurement configuration and/or user quality of experience (QoE) measurement configuration.

US 2021/051505 A1 discloses measurement information feedback for groupcast communication. For example, a first wireless device receives one or more messages indicating a distance threshold for a distance between the first wireless device; and a second wireless device. A control information is received. The control information indicates transmission of a measurement report of a sidelink between the first wireless device; and the second wireless device. Based on the distance threshold and a distance between the first wireless device and the second wireless device, a determination is made to transmit the measurement report of the sidelink. The measurement report is transmitted to the second wireless device via the sidelink.

WO 2018/142345 A1 relates to measurement collection in wireless communication networks. For example, methods and a related user equipment and a radio network node are described in which measurement control messages transmitted from a radio network node to the UE are transmitted on a first bearer having a first priority, and information response messages transmitted from the UE to the radio network node are transmitted on a second bearer having a second priority lower than the first priority.

WO 2021/067149 A1 discloses techniques for managing radio bearer compatibility in a communication network.

The prior art embodiments, however, still leave room for improvement.

According to various aspects disclosed herein, the invention is generally directed to methods of quality of experience measurement and reporting as recited in the independent claim. Further embodiments are recited in the dependent claims.

### SUMMARY OF THE INVENTION

In an embodiment, the invention provides a method of quality of experience (QoE) measurement and reporting as defined in claim 1.

The method can include transitioning from the radio resource control (RRC) connected state to the RRC inactive state in response to receiving the RRC release message. In the method, the radio resource control (RRC) release message comprises a suspendconfig information element (IE); and the suspendconfig IE comprises configuration parameters for operation of the user equipment (UE) in the RRC inactive state. Each quality of experience (QoE) configuration of the one or more QoE configurations, may be associated with an identifier; and the configuration parameters of the one or more QoE configurations indicate the identifiers associated with the at least one first quality of experience (QoE) configuration. Each quality of experience (QoE) configuration of the one or more QoE configurations comprises a parameter indicating the associated identifier for the QoE configuration.

Preferably, the radio resource control (RRC) release message indicates at least one first identifier of the one or more identifiers associated with the at least one first quality of experience (QoE) configuration. The radio resource control (RRC) release message may comprise a suspendconfig information element (IE) indicating transitioning of the user equipment (UE) to the RRC inactive state. The suspendconfig information element (IE) may indicate at least one first identifier associated with the at least one first quality of experience (QoE) configuration. The suspendconfig information element (IE) may comprise a parameter indicating a list of the at least one first quality of experience (QoE) measurement configuration. Preferably, the configuration parameters of the one or more quality of experience (QoE) configurations comprise first parameters for QoE measurement and second parameters for QoE reporting.

The first parameters may indicate one or more applications for quality of experience (QoE) measurement. The second parameters indicate one or more periodicities for quality of experience (QoE) reporting. In the method, transitioning from the radio resource control (RRC) inactive state to the RRC connected state comprises initiating a random access process; and transmitting of the one or more quality of experience (QoE) measurement reports is via a random access message of the random access process. The random access message may be a Msg3 message when the random access process is a four-step random access process. The the random access message is a MsgA message when the random access process is a two-step random access process. Transmitting the one or more quality of experience (QoE) measurement reports may be based on an uplink grant after the transitioning from the radio resource control (RRC) inactive state to the RRC connected state. Preferably, the uplink grant is received after transitioning from the radio resource control (RRC) inactive state to the RRC connected state.

Preferably, a first configuration parameter of the at least one first quality of experience (QoE) configuration of the one or more first QoE configurations is associated with: a first value while the user equipment (UE) is in the radio resource control (RRC) connected state; and a second value while the UE is in the RRC inactive state. Transmitting the one or more quality of experience (QoE) measurement reports may be via one or more radio resource control (RRC) messages. The one or more radio resource control (RRC) messages may be associated with a signaling radio bearer four (SRB4). The one or more radio resource control (RRC) messages comprise a MeasurementReportAppLayer message. At least some configuration parameters of the configuration parameters of the one or more quality of experience (QoE) configurations may be the same.

In the method, a measurement report of the one or more quality of experience (QoE) measurement reports comprises a measurement identifier; and the measurement identifier indicates a QoE configuration of the one or more QoE configurations that the QoE measurement report is associated with. The measurement identifier is used by radio access network (RAN) for forwarding the quality of experience (QoE) measurement report to a corresponding recipient. The method may further include receiving, after transitioning to the RRC connected state, a pause indicator indicating pausing quality of experience (QoE) measurement reports. The pause indicator may be a physical layer message. The physical layer message may be received via a downlink control channel, or via a medium access control (MAC) control element (CE). The pause indicator may be received via a radio resource control (RRC) message. The quality of experience (QoE) measurements may be performed while pausing the QoE measurement reports.

The method may also include receiving, after transitioning to the radio resource control (RRC) connected state, a resume indicator indicating resuming quality of experience (QoE) measurement reports. Therein, the resume indicator may be a physical layer message. The physical layer message amy be received via a downlink control channel. Preferably, the resume indication message is received via a medium access control (MAC) control element (CE). The resume indication may be received via a radio resource control (RRC) message. The at least one first quality of experience (QoE) configurations is preferably selected from the one or more QoE configurations based on a requirement for QoE measurements during the radio resource control (RRC) inactive state. Alternatively, the at least one first quality of experience (QoE) configurations may be selected from the one or more QoE configurations based on a requirement for QoE reports in response to transitioning from the radio resource control (RRC) inactive state to the RRC connected state. Transmitting the one or more quality of experience (QoE) measurement reports may be based on the one or more first QoE configurations. Preferably, the radio resource control (RRC) message may be a RRC reconfiguration message. The method may further comprise storing, by the user equipment (UE), the one or more quality of experience (QoE) measurement reports while the UE is in the radio resource control (RRC) inactive state.

### BRIEF DESCRIPTION OF THE DRAWINGS

FIG. 1 shows an example of a system of mobile communications according to some aspects of some of various exemplary embodiments of the present disclosure.
FIG. 2A and FIG. 2B show examples of radio protocol stacks for user plane and control plane, respectively, according to some aspects of some of various exemplary embodiments of the present disclosure.
FIG. 3A, FIG. 3B and FIG. 3C show example mappings between logical channels and transport channels in downlink, uplink and sidelink, respectively, according to some aspects of some of various exemplary embodiments of the present disclosure.
FIG. 4A, FIG. 4B and FIG. 4C show example mappings between transport channels and physical channels in downlink, uplink and sidelink, respectively, according to some aspects of some of various exemplary embodiments of the present disclosure.
FIG. 5A, FIG. 5B, FIG. 5C and FIG. 5D show examples of radio protocol stacks for NR sidelink communication according to some aspects of some of various exemplary embodiments of the present disclosure.
FIG. 6 shows example physical signals in downlink, uplink and sidelink according to some aspects of some of various exemplary embodiments of the present disclosure.
FIG. 7 shows examples of Radio Resource Control (RRC) states and transitioning between different RRC states according to some aspects of some of various exemplary embodiments of the present disclosure.
FIG. 8 shows example frame structure and physical resources according to some aspects of some of various exemplary embodiments of the present disclosure.
FIG. 9 shows example component carrier configurations in different carrier aggregation scenarios according to some aspects of some of various exemplary embodiments of the present disclosure.
FIG. 10 shows example bandwidth part configuration and switching according to some aspects of some of various exemplary embodiments of the present disclosure.
FIG. 11 shows example four-step contention-based and contention-free random access processes according to some aspects of some of various exemplary embodiments of the present disclosure.
FIG. 12 shows example two-step contention-based and contention-free random access processes according to some aspects of some of various exemplary embodiments of the present disclosure.
FIG. 13 shows example time and frequency structure of Synchronization Signal and Physical Broadcast Channel (PBCH) Block (SSB) according to some aspects of some of various exemplary embodiments of the present disclosure.
FIG. 14 shows example SSB burst transmissions according to some aspects of some of various exemplary embodiments of the present disclosure.
FIG. 15 shows example components of a user equipment and a base station for transmission and/or reception according to some aspects of some of various exemplary embodiments of the present disclosure.
FIG. 16 shows an example information element according to some aspects of some of various exemplary embodiments of the present disclosure.
FIG. 17 shows an example information element according to some aspects of some of various exemplary embodiments of the present disclosure.
FIG. 18 shows an example process according to some aspects of some of various exemplary embodiments of the present disclosure.
FIG. 19 shows an example process according to some aspects of some of various exemplary embodiments of the present disclosure.
FIG. 20 shows an example process according to some aspects of some of various exemplary embodiments of the present disclosure.

### DETAILED DESCRIPTION

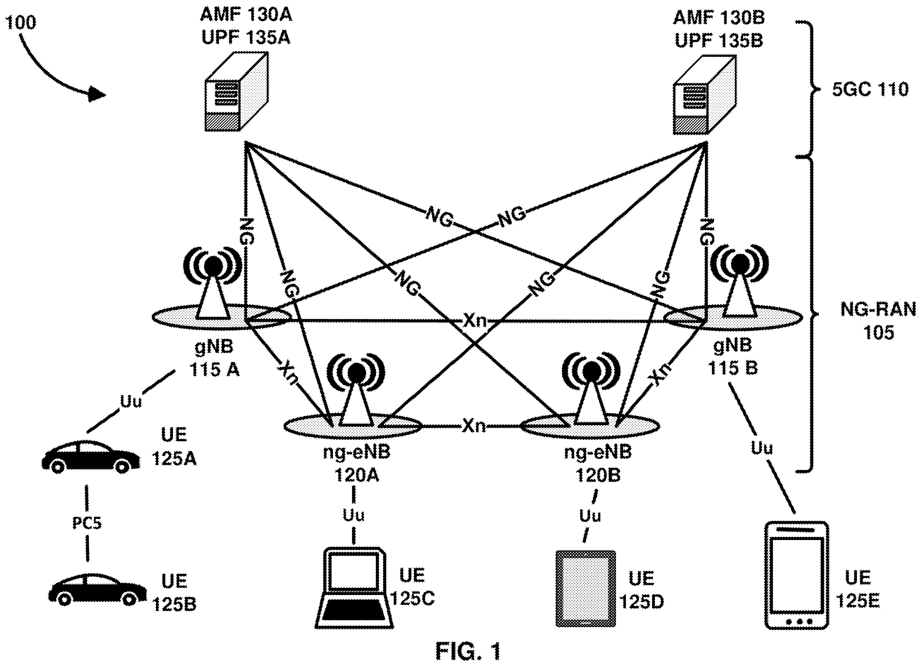

FIG. 1 shows an example of a system of mobile communications 100 according to some aspects of some of various exemplary embodiments of the present disclosure. The system of mobile communication 100 may be operated by a wireless communications system operator such as a Mobile Network Operator (MNO), a private network operator, a Multiple System Operator (MSO), an Internet of Things (IOT) network operator, etc., and may offer services such as voice, data (e.g., wireless Internet access), messaging, vehicular communications services such as Vehicle to Everything (V2X) communications services, safety services, mission critical service, services in residential, commercial or industrial settings such as IoT, industrial IOT (IIOT), etc.

The system of mobile communications 100 may enable various types of applications with different requirements in terms of latency, reliability, throughput, etc. Example supported applications include enhanced Mobile Broadband (eMBB), Ultra-Reliable Low-Latency Communications (URLLC), and massive Machine Type Communications (mMTC). eMBB may support stable connections with high peak data rates, as well as moderate rates for cell-edge users. URLLC may support application with strict requirements in terms of latency and reliability and moderate requirements in terms of data rate. Example mMTC application includes a network of a massive number of IoT devices, which are only sporadically active and send small data payloads.

The system of mobile communications 100 may include a Radio Access Network (RAN) portion and a core network portion. The example shown in FIG. 1 illustrates a Next Generation RAN (NG-RAN) 105 and a 5G Core Network (5GC) 110 as examples of the RAN and core network, respectively. Other examples of RAN and core network may be implemented without departing from the scope of this disclosure. Other examples of RAN include Evolved Universal Terrestrial Radio Access Network (EUTRAN), Universal Terrestrial Radio Access Network (UTRAN), etc. Other examples of core network include Evolved Packet Core (EPC), UMTS Core Network (UCN), etc. The RAN implements a Radio Access Technology (RAT) and resides between User Equipments (UEs) 125 and the core network. Examples of such RATs include New Radio (NR), Long Term Evolution (LTE) also known as Evolved Universal Terrestrial Radio Access (EUTRA), Universal Mobile Telecommunication System (UMTS), etc. The RAT of the example system of mobile communications 100 may be NR. The core network resides between the RAN and one or more external networks (e.g., data networks) and is responsible for functions such as mobility management, authentication, session management, setting up bearers and application of different Quality of Services (QoSs). The functional layer between the UE 125 and the RAN (e.g., the NG-RAN 105) may be referred to as Access Stratum (AS) and the functional layer between the UE 125 and the core network (e.g., the 5GC 110) may be referred to as Non-access Stratum (NAS).

The UEs 125 may include wireless transmission and reception means for communications with one or more nodes in the RAN, one or more relay nodes, or one or more other UEs, etc. Example of UEs include, but are not limited to, smartphones, tablets, laptops, computers, wireless transmission and/or reception units in a vehicle, V2X or Vehicle to Vehicle (V2V) devices, wireless sensors, IoT devices, IIOT devices, etc. Other names may be used for UEs such as a Mobile Station (MS), terminal equipment, terminal node, client device, mobile device, etc.

The RAN may include nodes (e.g., base stations) for communications with the UEs. For example, the NG-RAN 105 of the system of mobile communications 100 may comprise nodes for communications with the UEs 125. Different names for the RAN nodes may be used, for example depending on the RAT used for the RAN. A RAN node may be referred to as Node B (NB) in a RAN that uses the UMTS RAT. A RAN node may be referred to as an evolved Node B (eNB) in a RAN that uses LTE/EUTRA RAT. For the illustrative example of the system of mobile communications 100 in FIG. 1, the nodes of an NG-RAN 105 may be either a next generation Node B (gNB) 115 or a next generation evolved Node B (ng-eNB) 120. In this specification, the terms base station, RAN node, gNB and ng-eNB may be used interchangeably. The gNB 115 may provide NR user plane and control plane protocol terminations towards the UE 125. The ng-eNB 120 may provide E-UTRA user plane and control plane protocol terminations towards the UE 125. An interface between the gNB 115 and the UE 125 or between the ng-eNB 120 and the UE 125 may be referred to as a Uu interface. The Uu interface may be established with a user plane protocol stack and a control plane protocol stack. For a Uu interface, the direction from the base station (e.g., the gNB 115 or the ng-eNB 120) to the UE 125 may be referred to as downlink and the direction from the UE 125 to the base station (e.g., gNB 115 or ng-eNB 120) may be referred to as uplink.

The gNBs 115 and ng-eNBs 120 may be interconnected with each other by means of an Xn interface. The Xn interface may comprise an Xn User plane (Xn-U) interface and an Xn Control plane (Xn-C) interface. The transport network layer of the Xn-U interface may be built on Internet Protocol (IP) transport and GPRS Tunneling Protocol (GTP) may be used on top of User Datagram Protocol (UDP)/IP to carry the user plane protocol data units (PDUs). Xn-U may provide non-guaranteed delivery of user plane PDUs and may support data forwarding and flow control. The transport network layer of the Xn-C interface may be built on Stream Control Transport Protocol (SCTP) on top of IP. The application layer signaling protocol may be referred to as XnAP (Xn Application Protocol). The SCTP layer may provide the guaranteed delivery of application layer messages. In the transport IP layer, point-to-point transmission may be used to deliver the signaling PDUs. The Xn-C interface may support Xn interface management, UE mobility management, including context transfer and RAN paging, and dual connectivity.

The gNBs 115 and ng-eNBs 120 may also be connected to the 5GC 110 by means of the NG interfaces, more specifically to an Access and Mobility Management Function (AMF) 130 of the 5GC 110 by means of the NG-C interface and to a User Plane Function (UPF) 135 of the 5GC 110 by means of the NG-U interface. The transport network layer of the NG-U interface may be built on IP transport and GTP protocol may be used on top of UDP/IP to carry the user plane PDUs between the NG-RAN node (e.g., gNB 115 or ng-eNB 120 ) and the UPF 135. NG-U may provide non-guaranteed delivery of user plane PDUs between the NG-RAN node and the UPF. The transport network layer of the NG-C interface may be built on IP transport. For the reliable transport of signaling messages, SCTP may be added on top of IP. The application layer signaling protocol may be referred to as NGAP (NG Application Protocol). The SCTP layer may provide guaranteed delivery of application layer messages. In the transport, IP layer point-to-point transmission may be used to deliver the signaling PDUs. The NG-C interface may provide the following functions: NG interface management; UE context management; UE mobility management; transport of NAS messages; paging; PDU Session Management; configuration transfer; and warning message transmission.

The gNB 115 or the ng-eNB 120 may host one or more of the following functions: Radio Resource Management functions such as Radio Bearer Control, Radio Admission Control, Connection Mobility Control, Dynamic allocation of resources to UEs in both uplink and downlink (e.g., scheduling); IP and Ethernet header compression, encryption and integrity protection of data; Selection of an AMF at UE attachment when no routing to an AMF can be determined from the information provided by the UE; Routing of User Plane data towards UPF(s); Routing of Control Plane information towards AMF; Connection setup and release; Scheduling and transmission of paging messages; Scheduling and transmission of system broadcast information (e.g., originated from the AMF); Measurement and measurement reporting configuration for mobility and scheduling; Transport level packet marking in the uplink; Session Management; Support of Network Slicing; QoS Flow management and mapping to data radio bearers; Support of UEs in RRC Inactive state; Distribution function for NAS messages; Radio access network sharing; Dual Connectivity; Tight interworking between NR and E-UTRA; and Maintaining security and radio configuration for User Plane 5G system (5GS) Cellular IoT (CIoT) Optimization.

The AMF 130 may host one or more of the following functions: NAS signaling termination; NAS signaling security; AS Security control; Inter CN node signaling for mobility between 3GPP access networks; Idle mode UE Reachability (including control and execution of paging retransmission); Registration Area management; Support of intra-system and inter-system mobility; Access Authentication; Access Authorization including check of roaming rights; Mobility management control (subscription and policies); Support of Network Slicing; Session Management Function (SMF) selection; Selection of 5GS CIoT optimizations.

The UPF 135 may host one or more of the following functions: Anchor point for Intra-/Inter-RAT mobility (when applicable); External PDU session point of interconnect to Data Network; Packet routing & forwarding; Packet inspection and User plane part of Policy rule enforcement; Traffic usage reporting; Uplink classifier to support routing traffic flows to a data network; Branching point to support multi-homed PDU session; QoS handling for user plane, e.g. packet filtering, gating, UL/DL rate enforcement; Uplink Traffic verification (Service Data Flow (SDF) to QoS flow mapping); Downlink packet buffering and downlink data notification triggering.

As shown in FIG. 1, the NG-RAN 105 may support the PC5 interface between two UEs 125 (e.g., UE 125A and UE125B). In the PC5 interface, the direction of communications between two UEs (e.g., from UE 125A to UE 125B or vice versa) may be referred to as sidelink. Sidelink transmission and reception over the PC5 interface may be supported when the UE 125 is inside NG-RAN 105 coverage, irrespective of which RRC state the UE is in, and when the UE 125 is outside NG-RAN 105 coverage. Support of V2X services via the PC5 interface may be provided by NR sidelink communication and/or V2X sidelink communication.

PC5-S signaling may be used for unicast link establishment with Direct Communication Request/Accept message. A UE may self-assign its source Layer-2 ID for the PC5 unicast link for example based on the V2X service type. During unicast link establishment procedure, the UE may send its source Layer-2 ID for the PC5 unicast link to the peer UE, e.g., the UE for which a destination ID has been received from the upper layers. A pair of source Layer-2 ID and destination Layer-2 ID may uniquely identify a unicast link. The receiving UE may verify that the said destination ID belongs to it and may accept the Unicast link establishment request from the source UE. During the PC5 unicast link establishment procedure, a PC5-RRC procedure on the Access Stratum may be invoked for the purpose of UE sidelink context establishment as well as for AS layer configurations, capability exchange etc. PC5-RRC signaling may enable exchanging UE capabilities and AS layer configurations such as Sidelink Radio Bearer configurations between pair of UEs for which a PC5 unicast link is established.

NR sidelink communication may support one of three types of transmission modes (e.g., Unicast transmission, Groupcast transmission, and Broadcast transmission) for a pair of a Source Layer-2 ID and a Destination Layer-2 ID in the AS. The Unicast transmission mode may be characterized by: Support of one PC5-RRC connection between peer UEs for the pair; Transmission and reception of control information and user traffic between peer UEs in sidelink; Support of sidelink HARQ feedback; Support of sidelink transmit power control; Support of RLC Acknowledged Mode (AM); and Detection of radio link failure for the PC5-RRC connection. The Groupcast transmission may be characterized by: Transmission and reception of user traffic among UEs belonging to a group in sidelink; and Support of sidelink HARQ feedback. The Broadcast transmission may be characterized by: Transmission and reception of user traffic among UEs in sidelink.

A Source Layer-2 ID, a Destination Layer-2 ID and a PC5 Link Identifier may be used for NR sidelink communication. The Source Layer-2 ID may be a link-layer identity that identifies a device or a group of devices that are recipients of sidelink communication frames. The Destination Layer-2 ID may be a link-layer identity that identifies a device that originates sidelink communication frames. In some examples, the Source Layer-2 ID and the Destination Layer-2 ID may be assigned by a management function in the Core Network. The Source Layer-2 ID may identify the sender of the data in NR sidelink communication. The Source Layer-2 ID may be 24 bits long and may be split in the MAC layer into two bit strings: One bit string may be the LSB part (8 bits) of Source Layer-2 ID and forwarded to physical layer of the sender. This may identify the source of the intended data in sidelink control information and may be used for filtering of packets at the physical layer of the receiver; and the Second bit string may be the MSB part (16 bits) of the Source Layer-2 ID and may be carried within the Medium Access Control (MAC) header. This may be used for filtering of packets at the MAC layer of the receiver. The Destination Layer-2 ID may identify the target of the data in NR sidelink communication. For NR sidelink communication, the Destination Layer-2 ID may be 24 bits long and may be split in the MAC layer into two bit strings: One bit string may be the LSB part (16 bits) of Destination Layer-2 ID and forwarded to physical layer of the sender. This may identify the target of the intended data in sidelink control information and may be used for filtering of packets at the physical layer of the receiver; and the Second bit string may be the MSB part (8 bits) of the Destination Layer-2 ID and may be carried within the MAC header. This may be used for filtering of packets at the MAC layer of the receiver. The PC5 Link Identifier may uniquely identify the PC5 unicast link in a UE for the lifetime of the PC5 unicast link. The PC5 Link Identifier may be used to indicate the PC5 unicast link whose sidelink Radio Link failure (RLF) declaration was made and PC5-RRC connection was released.

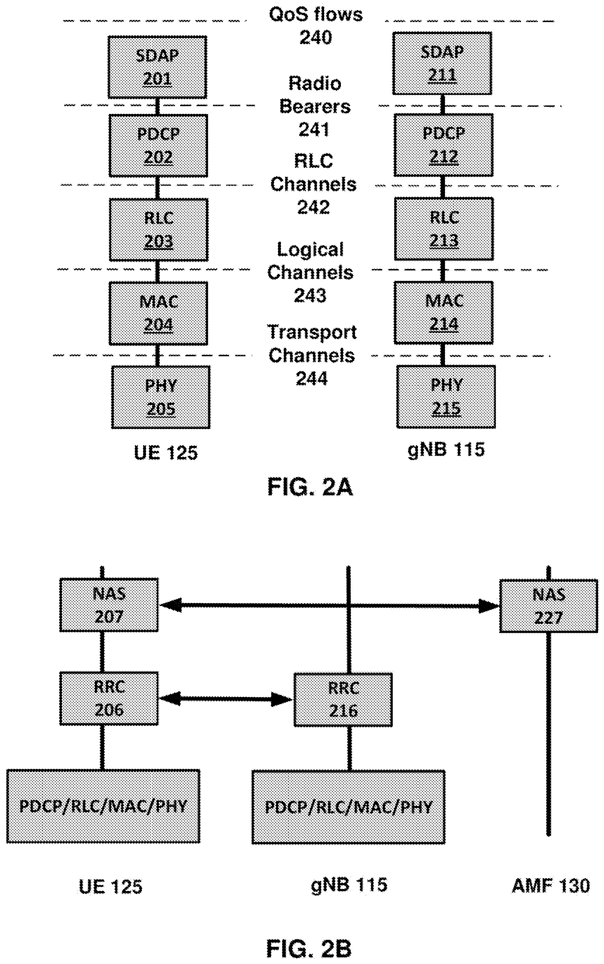

FIG. 2A and FIG. 2B show examples of radio protocol stacks for user plane and control plane, respectively, according to some aspects of some of various exemplary embodiments of the present disclosure. As shown in FIG. 2A, the protocol stack for the user plane of the Uu interface (between the UE 125 and the gNB 115) includes Service Data Adaptation Protocol (SDAP) 201 and SDAP 211, Packet Data Convergence Protocol (PDCP) 202 and PDCP 212, Radio Link Control (RLC) 203 and RLC 213, MAC 204 and MAC 214 sublayers of layer 2 and Physical (PHY) 205 and PHY 215 layer (layer 1 also referred to as L1).

The PHY 205 and PHY 215 offer transport channels 244 to the MAC 204 and MAC 214 sublayer. The MAC 204 and MAC 214 sublayer offer logical channels 243 to the RLC 203 and RLC 213 sublayer. The RLC 203 and RLC 213 sublayer offer RLC channels 242 to the PDCP 202 and PCP 212 sublayer. The PDCP 202 and PDCP 212 sublayer offer radio bearers 241 to the SDAP 201 and SDAP 211 sublayer. Radio bearers may be categorized into two groups: Data Radio Bearers (DRBs) for user plane data and Signaling Radio Bearers (SRBs) for control plane data. The SDAP 201 and SDAP 211 sublayer offers QoS flows 240 to 5GC.

The main services and functions of the MAC 204 or MAC 214 sublayer include: mapping between logical channels and transport channels; Multiplexing/demultiplexing of MAC Service Data Units (SDUs) belonging to one or different logical channels into/from Transport Blocks (TB) delivered to/from the physical layer on transport channels; Scheduling information reporting; Error correction through Hybrid Automatic Repeat Request (HARQ) (one HARQ entity per cell in case of carrier aggregation (CA)); Priority handling between UEs by means of dynamic scheduling; Priority handling between logical channels of one UE by means of Logical Channel Prioritization (LCP); Priority handling between overlapping resources of one UE; and Padding. A single MAC entity may support multiple numerologies, transmission timings and cells. Mapping restrictions in logical channel prioritization control which numerology(ies), cell(s), and transmission timing(s) a logical channel may use.

The HARQ functionality may ensure delivery between peer entities at Layer 1. A single HARQ process may support one TB when the physical layer is not configured for downlink/uplink spatial multiplexing, and when the physical layer is configured for downlink/uplink spatial multiplexing, a single HARQ process may support one or multiple TBs.

The RLC 203 or RLC 213 sublayer may support three transmission modes: Transparent Mode (TM); Unacknowledged Mode (UM); and Acknowledged Mode (AM). The RLC configuration may be per logical channel with no dependency on numerologies and/or transmission durations, and Automatic Repeat Request (ARQ) may operate on any of the numerologies and/or transmission durations the logical channel is configured with.

The main services and functions of the RLC 203 or RLC 213 sublayer depend on the transmission mode (e.g., TM, UM or AM) and may include: Transfer of upper layer PDUs; Sequence numbering independent of the one in PDCP (UM and AM); Error Correction through ARQ (AM only); Segmentation (AM and UM) and re-segmentation (AM only) of RLC SDUs; Reassembly of SDU (AM and UM); Duplicate Detection (AM only); RLC SDU discard (AM and UM); RLC re-establishment; and Protocol error detection (AM only).

The automatic repeat request within the RLC 203 or RLC 213 sublayer may have the following characteristics: ARQ retransmits RLC SDUs or RLC SDU segments based on RLC status reports; Polling for RLC status report may be used when needed by RLC; RLC receiver may also trigger RLC status report after detecting a missing RLC SDU or RLC SDU segment.

The main services and functions of the PDCP 202 or PDCP 212 sublayer may include: Transfer of data (user plane or control plane); Maintenance of PDCP Sequence Numbers (SNs); Header compression and decompression using the Robust Header Compression (ROHC) protocol; Header compression and decompression using EHC protocol; Ciphering and deciphering; Integrity protection and integrity verification; Timer based SDU discard; Routing for split bearers; Duplication; Reordering and in-order delivery; Out-of-order delivery; and Duplicate discarding.

The main services and functions of SDAP 201 or SDAP 211 include: Mapping between a QoS flow and a data radio bearer; and Marking QoS Flow ID (QFI) in both downlink and uplink packets. A single protocol entity of SDAP may be configured for each individual PDU session.

As shown in FIG. 2B, the protocol stack of the control plane of the Uu interface (between the UE 125 and the gNB 115) includes PHY layer (layer 1), and MAC, RLC and PDCP sublayers of layer 2 as described above and in addition, the RRC 206 sublayer and RRC 216 sublayer. The main services and functions of the RRC 206 sublayer and the RRC 216 sublayer over the Uu interface include: Broadcast of System Information related to AS and NAS; Paging initiated by 5GC or NG-RAN; Establishment, maintenance and release of an RRC connection between the UE and NG-RAN (including Addition, modification and release of carrier aggregation; and Addition, modification and release of Dual Connectivity in NR or between E-UTRA and NR); Security functions including key management; Establishment, configuration, maintenance and release of SRBs and DRBs; Mobility functions (including Handover and context transfer; UE cell selection and reselection and control of cell selection and reselection; and Inter-RAT mobility); QoS management functions; UE measurement reporting and control of the reporting; Detection of and recovery from radio link failure; and NAS message transfer to/from NAS from/ to UE. The NAS 207 and NAS 227 layer is a control protocol (terminated in AMF on the network side) that performs the functions such as authentication, mobility management, security control, etc.

The sidelink specific services and functions of the RRC sublayer over the Uu interface include: Configuration of sidelink resource allocation via system information or dedicated signaling; Reporting of UE sidelink information; Measurement configuration and reporting related to sidelink; and Reporting of UE assistance information for SL traffic pattern(s).

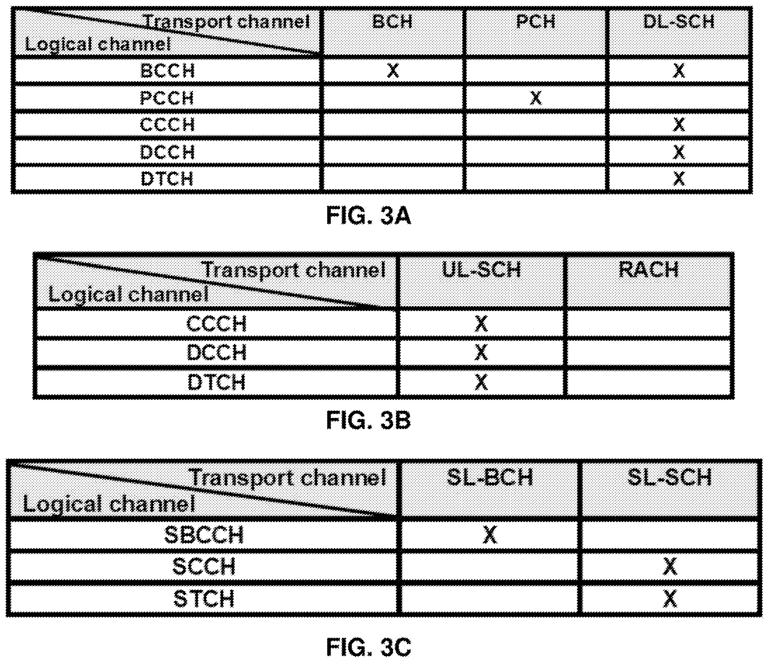

FIG. 3A, FIG. 3B and FIG. 3C show example mappings between logical channels and transport channels in downlink, uplink and sidelink, respectively, according to some aspects of some of various exemplary embodiments of the present disclosure. Different kinds of data transfer services may be offered by MAC. Each logical channel type may be defined by what type of information is transferred. Logical channels may be classified into two groups: Control Channels and Traffic Channels. Control channels may be used for the transfer of control plane information only. The Broadcast Control Channel (BCCH) is a downlink channel for broadcasting system control information. The Paging Control Channel (PCCH) is a downlink channel that carries paging messages. The Common Control Channel (CCCH) is channel for transmitting control information between UEs and network. This channel may be used for UEs having no RRC connection with the network. The Dedicated Control Channel (DCCH) is a point-to-point bi-directional channel that transmits dedicated control information between a UE and the network and may be used by UEs having an RRC connection. Traffic channels may be used for the transfer of user plane information only. The Dedicated Traffic Channel (DTCH) is a point-to-point channel, dedicated to one UE, for the transfer of user information. A DTCH may exist in both uplink and downlink. Sidelink Control Channel (SCCH) is a sidelink channel for transmitting control information (e.g., PC5-RRC and PC5-S messages) from one UE to other UE(s). Sidelink Traffic Channel (STCH) is a sidelink channel for transmitting user information from one UE to other UE(s). Sidelink Broadcast Control Channel (SBCCH) is a sidelink channel for broadcasting sidelink system information from one UE to other UE(s).

The downlink transport channel types include Broadcast Channel (BCH), Downlink Shared Channel (DL-SCH), and Paging Channel (PCH). The BCH may be characterized by: fixed, pre-defined transport format; and requirement to be broadcast in the entire coverage area of the cell, either as a single message or by beamforming different BCH instances. The DL-SCH may be characterized by: support for HARQ; support for dynamic link adaptation by varying the modulation, coding and transmit power; possibility to be broadcast in the entire cell; possibility to use beamforming; support for both dynamic and semi-static resource allocation; and the support for UE Discontinuous Reception (DRX) to enable UE power saving. The DL-SCH may be characterized by: support for HARQ; support for dynamic link adaptation by varying the modulation, coding and transmit power; possibility to be broadcast in the entire cell; possibility to use beamforming; support for both dynamic and semi-static resource allocation; support for UE discontinuous reception (DRX) to enable UE power saving. The PCH may be characterized by: support for UE discontinuous reception (DRX) to enable UE power saving (DRX cycle is indicated by the network to the UE); requirement to be broadcast in the entire coverage area of the cell, either as a single message or by beamforming different BCH instances; mapped to physical resources which can be used dynamically also for traffic/other control channels.

In downlink, the following connections between logical channels and transport channels may exist: BCCH may be mapped to BCH; BCCH may be mapped to DL-SCH; PCCH may be mapped to PCH; CCCH may be mapped to DL-SCH; DCCH may be mapped to DL-SCH; and DTCH may be mapped to DL-SCH.

The uplink transport channel types include Uplink Shared Channel (UL-SCH) and Random Access Channel(s) (RACH). The UL-SCH may be characterized by possibility to use beamforming; support for dynamic link adaptation by varying the transmit power and potentially modulation and coding; support for HARQ; support for both dynamic and semi-static resource allocation. The RACH may be characterized by limited control information; and collision risk.

In Uplink, the following connections between logical channels and transport channels may exist: CCCH may be mapped to UL-SCH; DCCH may be mapped to UL- SCH; and DTCH may be mapped to UL-SCH.

The sidelink transport channel types include: Sidelink broadcast channel (SL-BCH) and Sidelink shared channel (SL-SCH). The SL-BCH may be characterized by pre-defined transport format. The SL-SCH may be characterized by support for unicast transmission, groupcast transmission and broadcast transmission; support for both UE autonomous resource selection and scheduled resource allocation by NG-RAN; support for both dynamic and semi-static resource allocation when UE is allocated resources by the NG-RAN; support for HARQ; and support for dynamic link adaptation by varying the transmit power, modulation and coding.

In the sidelink, the following connections between logical channels and transport channels may exist: SCCH may be mapped to SL-SCH; STCH may be mapped to SL-SCH; and SBCCH may be mapped to SL-BCH.

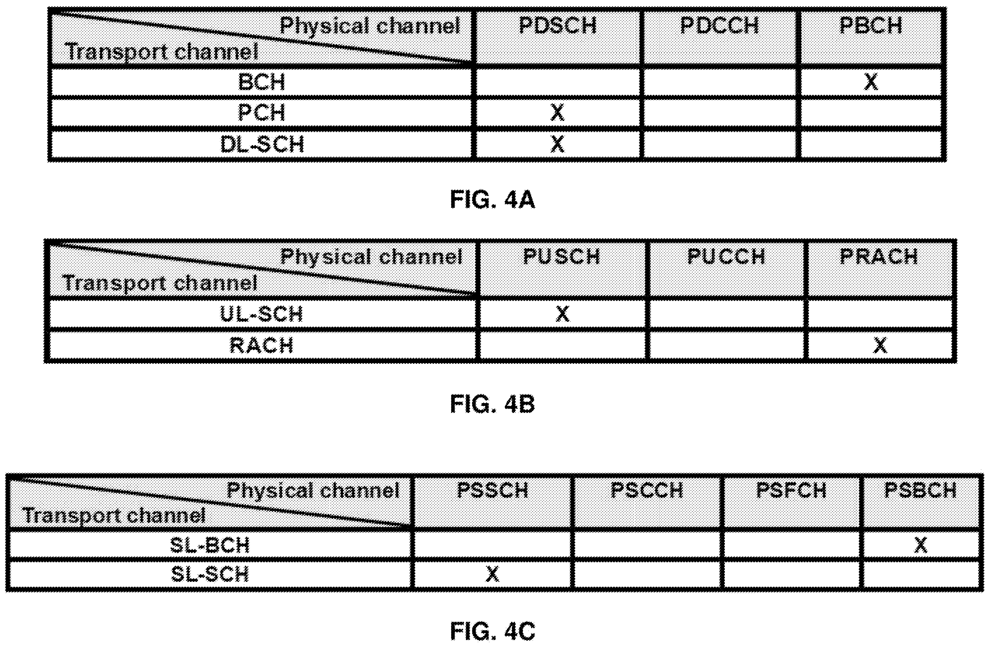

FIG. 4A, FIG. 4B and FIG. 4C show example mappings between transport channels and physical channels in downlink, uplink and sidelink, respectively, according to some aspects of some of various exemplary embodiments of the present disclosure. The physical channels in downlink include Physical Downlink Shared Channel (PDSCH), Physical Downlink Control Channel (PDCCH) and Physical Broadcast Channel (PBCH). The PCH and DL-SCH transport channels are mapped to the PDSCH. The BCH transport channel is mapped to the PBCH. A transport channel is not mapped to the PDCCH but Downlink Control Information (DCI) is transmitted via the PDCCH.

The physical channels in the uplink include Physical Uplink Shared Channel (PUSCH), Physical Uplink Control Channel (PUCCH) and Physical Random Access Channel (PRACH). The UL-SCH transport channel may be mapped to the PUSCH and the RACH transport channel may be mapped to the PRACH. A transport channel is not mapped to the PUCCH but Uplink Control Information (UCI) is transmitted via the PUCCH.

The physical channels in the sidelink include Physical Sidelink Shared Channel (PSSCH), Physical Sidelink Control Channel (PSCCH), Physical Sidelink Feedback Channel (PSFCH) and Physical Sidelink Broadcast Channel (PSBCH). The Physical Sidelink Control Channel (PSCCH) may indicate resource and other transmission parameters used by a UE for PSSCH. The Physical Sidelink Shared Channel (PSSCH) may transmit the TBs of data themselves, and control information for HARQ procedures and CSI feedback triggers, etc. At least 6 OFDM symbols within a slot may be used for PSSCH transmission. Physical Sidelink Feedback Channel (PSFCH) may carry the HARQ feedback over the sidelink from a UE which is an intended recipient of a PSSCH transmission to the UE which performed the transmission. PSFCH sequence may be transmitted in one PRB repeated over two OFDM symbols near the end of the sidelink resource in a slot. The SL-SCH transport channel may be mapped to the PSSCH. The SL-BCH may be mapped to PSBCH. No transport channel is mapped to the PSFCH but Sidelink Feedback Control Information (SFCI) may be mapped to the PSFCH. No transport channel is mapped to PSCCH but Sidelink Control Information (SCI) may mapped to the PSCCH.

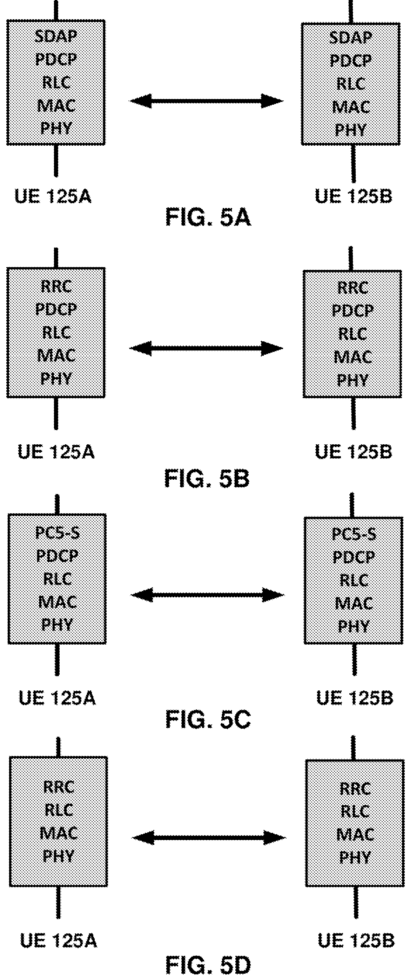

FIG. 5A, FIG. 5B, FIG. 5C and FIG. 5D show examples of radio protocol stacks for NR sidelink communication according to some aspects of some of various exemplary embodiments of the present disclosure. The AS protocol stack for user plane in the PC5 interface (i.e., for STCH) may consist of SDAP, PDCP, RLC and MAC sublayers, and the physical layer. The protocol stack of user plane is shown in FIG. 5A. The AS protocol stack for SBCCH in the PC5 interface may consist of RRC, RLC, MAC sublayers, and the physical layer as shown below in FIG. 5B. For support of PC5-S protocol, PC5-S is located on top of PDCP, RLC and MAC sublayers, and the physical layer in the control plane protocol stack for SCCH for PC5-S, as shown in FIG. 5C. The AS protocol stack for the control plane for SCCH for RRC in the PC5 interface consists of RRC, PDCP, RLC and MAC sublayers, and the physical layer. The protocol stack of control plane for SCCH for RRC is shown in FIG. 5D.

The Sidelink Radio Bearers (SLRBs) may be categorized into two groups: Sidelink Data Radio Bearers (SL DRB) for user plane data and Sidelink Signaling Radio Bearers (SL SRB) for control plane data. Separate SL SRBs using different SCCHs may be configured for PC5-RRC and PC5-S signaling, respectively.

The MAC sublayer may provide the following services and functions over the PC5 interface: Radio resource selection; Packet filtering; Priority handling between uplink and sidelink transmissions for a given UE; and Sidelink CSI reporting. With logical channel prioritization restrictions in MAC, only sidelink logical channels belonging to the same destination may be multiplexed into a MAC PDU for every unicast, groupcast and broadcast transmission which may be associated to the destination. For packet filtering, a SL-SCH MAC header including portions of both Source Layer-2 ID and a Destination Layer-2 ID may be added to a MAC PDU. The Logical Channel Identifier (LCID) included within a MAC subheader may uniquely identify a logical channel within the scope of the Source Layer-2 ID and Destination Layer-2 ID combination.

The services and functions of the RLC sublayer may be supported for sidelink. Both RLC Unacknowledged Mode (UM) and Acknowledged Mode (AM) may be used in unicast transmission while only UM may be used in groupcast or broadcast transmission. For UM, only unidirectional transmission may be supported for groupcast and broadcast.

The services and functions of the PDCP sublayer for the Uu interface may be supported for sidelink with some restrictions: Out-of-order delivery may be supported only for unicast transmission; and Duplication may not be supported over the PC5 interface.

The SDAP sublayer may provide the following service and function over the PC5 interface: Mapping between a QoS flow and a sidelink data radio bearer. There may be one SDAP entity per destination for one of unicast, groupcast and broadcast which is associated to the destination.

The RRC sublayer may provide the following services and functions over the PC5 interface: Transfer of a PC5-RRC message between peer UEs; Maintenance and release of a PC5-RRC connection between two UEs; and Detection of sidelink radio link failure for a PC5-RRC connection based on indication from MAC or RLC. A PC5-RRC connection may be a logical connection between two UEs for a pair of Source and Destination Layer-2 IDs which may be considered to be established after a corresponding PC5 unicast link is established. There may be one-to-one correspondence between the PC5-RRC connection and the PC5 unicast link. A UE may have multiple PC5-RRC connections with one or more UEs for different pairs of Source and Destination Layer-2 IDs. Separate PC5-RRC procedures and messages may be used for a UE to transfer UE capability and sidelink configuration including SL-DRB configuration to the peer UE. Both peer UEs may exchange their own UE capability and sidelink configuration using separate bi-directional procedures in both sidelink directions.

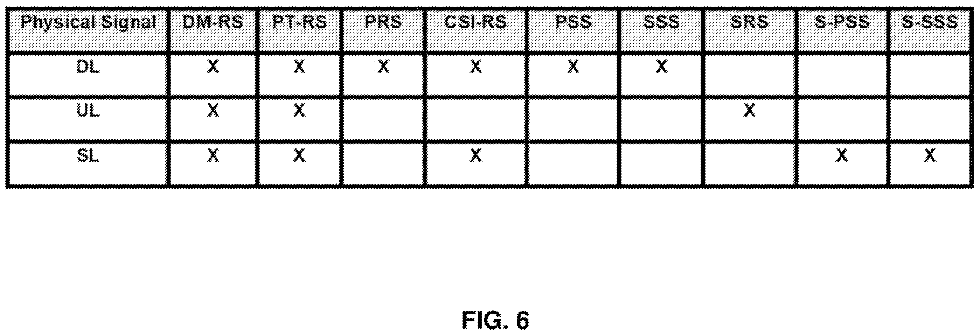

FIG. 6 shows example physical signals in downlink, uplink and sidelink according to some aspects of some of various exemplary embodiments of the present disclosure. The Demodulation Reference Signal (DM-RS) may be used in downlink, uplink and sidelink and may be used for channel estimation. DM-RS is a UE-specific reference signal and may be transmitted together with a physical channel in downlink, uplink or sidelink and may be used for channel estimation and coherent detection of the physical channel. The Phase Tracking Reference Signal (PT-RS) may be used in downlink, uplink and sidelink and may be used for tracking the phase and mitigating the performance loss due to phase noise. The PT-RS may be used mainly to estimate and minimize the effect of Common Phase Error (CPE) on system performance. Due to the phase noise properties, PT-RS signal may have a low density in the frequency domain and a high density in the time domain. PT-RS may occur in combination with DM-RS and when the network has configured PT-RS to be present. The Positioning Reference Signal (PRS) may be used in downlink for positioning using different positioning techniques. PRS may be used to measure the delays of the downlink transmissions by correlating the received signal from the base station with a local replica in the receiver. The Channel State Information Reference Signal (CSI-RS) may be used in downlink and sidelink. CSI-RS may be used for channel state estimation, Reference Signal Received Power (RSRP) measurement for mobility and beam management, time/ frequency tracking for demodulation among other uses. CSI-RS may be configured UE-specifically but multiple users may share the same CSI-RS resource. The UE may determine CSI reports and transit them in the uplink to the base station using PUCCH or PUSCH. The CSI report may be carried in a sidelink MAC CE. The Primary Synchronization Signal (PSS) and the Secondary Synchronization Signal (SSS) may be used for radio fame synchronization. The PSS and SSS may be used for the cell search procedure during the initial attach or for mobility purposes. The Sounding Reference Signal (SRS) may be used in uplink for uplink channel estimation. Similar to CSI-RS, the SRS may serve as QCL reference for other physical channels such that they can be configured and transmitted quasi-collocated with SRS. The Sidelink PSS (S-PSS) and Sidelink SSS (S-SSS) may be used in sidelink for sidelink synchronization.

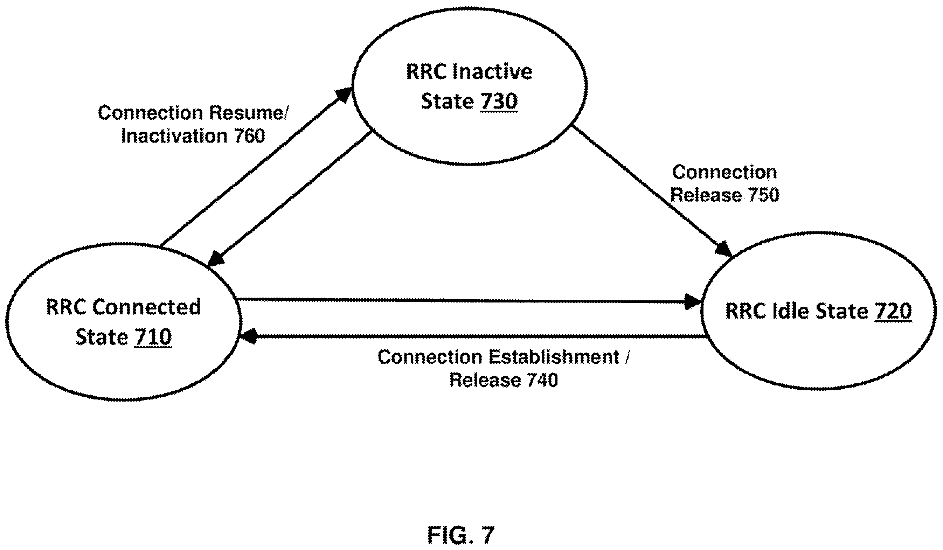

FIG. 7 shows examples of Radio Resource Control (RRC) states and transitioning between different RRC states according to some aspects of some of various exemplary embodiments of the present disclosure. A UE may be in one of three RRC states: RRC Connected State 710, RRC Idle State 720 and RRC Inactive state 730. After power up, the UE may be in RRC Idle state 720 and the UE may establish connection with the network using initial access and via an RRC connection establishment procedure to perform data transfer and/or to make/receive voice calls. Once RRC connection is established, the UE may be in RRC Connected State 710. The UE may transition from the RRC Idle state 720 to the RRC connected state 710 or from the RRC Connected State 710 to the RRC Idle state 720 using the RRC connection Establishment/Release procedures 740.

To reduce the signaling load and the latency resulting from frequent transitioning from the RRC Connected State 710 to the RRC Idle State 720 when the UE transmits frequent small data, the RRC Inactive State 730 may be used. In the RRC Inactive State 730, the AS context may be stored by both UE and gNB. This may result in faster state transition from the RRC Inactive State 730 to RRC Connected State 710. The UE may transition from the RRC Inactive State 730 to the RRC Connected State 710 or from the RRC Connected State 710 to the RRC Inactive State 730 using the RRC Connection Resume/Inactivation procedures 760. The UE may transition from the RRC Inactive State 730 to RRC Idle State 720 using an RRC Connection Release procedure 750.

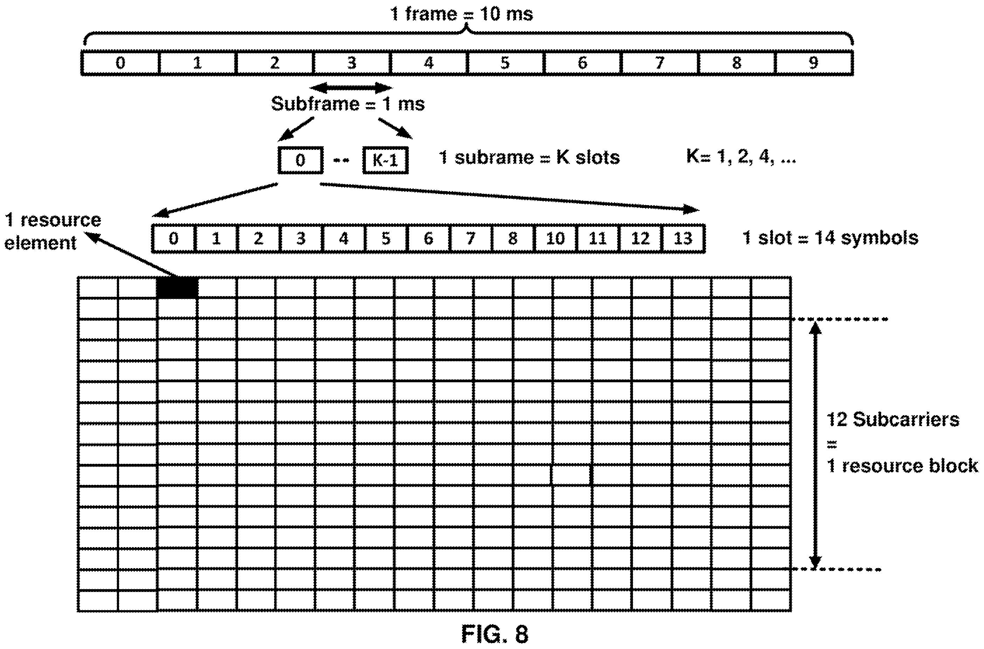

FIG. 8 shows example frame structure and physical resources according to some aspects of some of various exemplary embodiments of the present disclosure. The downlink or uplink or sidelink transmissions may be organized into frames with 10 ms duration, consisting of ten 1 ms subframes. Each subframe may consist of 1, 2, 4, ... slots, wherein the number of slots per subframe may depend on the subcarrier spacing of the carrier on which the transmission takes place. The slot duration may be 14 symbols with Normal Cyclic Prefix (CP) and 12 symbols with Extended CP and may scale in time as a function of the used sub-carrier spacing so that there is an integer number of slots in a subframe. FIG. 8 shows a resource grid in time and frequency domain. Each element of the resource grid, comprising one symbol in time and one subcarrier in frequency, is referred to as a Resource Element (RE). A Resource Block (RB) may be defined as 12 consecutive subcarriers in the frequency domain.

In some examples and with non-slot-based scheduling, the transmission of a packet may occur over a portion of a slot, for example during 2, 4 or 7 OFDM symbols which may also be referred to as mini-slots. The mini-slots may be used for low latency applications such as URLLC and operation in unlicensed bands. In some embodiments, the mini-slots may also be used for fast flexible scheduling of services (e.g., pre-emption of URLLC over eMBB).

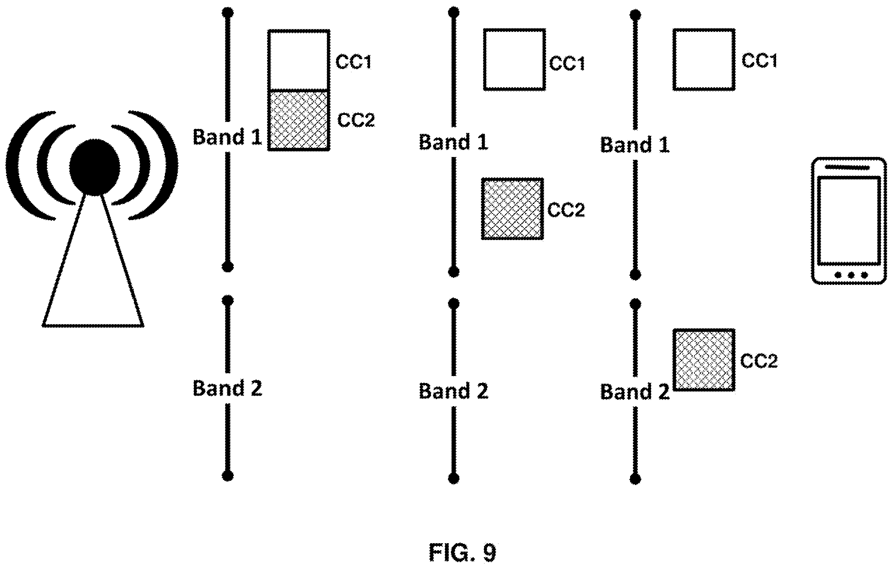

FIG. 9 shows example component carrier configurations in different carrier aggregation scenarios according to some aspects of some of various exemplary embodiments of the present disclosure. In Carrier Aggregation (CA), two or more Component Carriers (CCs) may be aggregated. A UE may simultaneously receive or transmit on one or multiple CCs depending on its capabilities. CA may be supported for both contiguous and non-contiguous CCs in the same band or on different bands as shown in FIG. 9. A gNB and the UE may communicate using a serving cell. A serving cell may be associated at least with one downlink CC (e.g., may be associated only with one downlink CC or may be associated with a downlink CC and an uplink CC). A serving cell may be a Primary Cell (PCell) or a Secondary cCell (SCell).

A UE may adjust the timing of its uplink transmissions using an uplink timing control procedure. A Timing Advance (TA) may be used to adjust the uplink frame timing relative to the downlink frame timing. The gNB may determine the desired Timing Advance setting and provides that to the UE. The UE may use the provided TA to determine its uplink transmit timing relative to the UE's observed downlink receive timing.

In the RRC Connected state, the gNB may be responsible for maintaining the timing advance to keep the L1 synchronized. Serving cells having uplink to which the same timing advance applies and using the same timing reference cell are grouped in a Timing Advance Group (TAG). A TAG may contain at least one serving cell with configured uplink. The mapping of a serving cell to a TAG may be configured by RRC. For the primary TAG, the UE may use the PCell as timing reference cell, except with shared spectrum channel access where an SCell may also be used as timing reference cell in certain cases. In a secondary TAG, the UE may use any of the activated SCells of this TAG as a timing reference cell and may not change it unless necessary.

Timing advance updates may be signaled by the gNB to the UE via MAC CE commands. Such commands may restart a TAG-specific timer which may indicate whether the L1 can be synchronized or not: when the timer is running, the L1 may be considered synchronized, otherwise, the L1 may be considered non-synchronized (in which case uplink transmission may only take place on PRACH).

A UE with single timing advance capability for CA may simultaneously receive and/or transmit on multiple CCs corresponding to multiple serving cells sharing the same timing advance (multiple serving cells grouped in one TAG). A UE with multiple timing advance capability for CA may simultaneously receive and/or transmit on multiple CCs corresponding to multiple serving cells with different timing advances (multiple serving cells grouped in multiple TAGs). The NG-RAN may ensure that each TAG contains at least one serving cell. A non-CA capable UE may receive on a single CC and may transmit on a single CC corresponding to one serving cell only (one serving cell in one TAG).

The multi-carrier nature of the physical layer in case of CA may be exposed to the MAC layer and one HARQ entity may be required per serving cell. When CA is configured, the UE may have one RRC connection with the network. At RRC connection establishment/re-establishment/handover, one serving cell (e.g., the PCell) may provide the NAS mobility information. Depending on UE capabilities, SCells may be configured to form together with the PCell a set of serving cells. The configured set of serving cells for a UE may consist of one PCell and one or more SCells. The reconfiguration, addition and removal of SCells may be performed by RRC.

In a dual connectivity scenario, a UE may be configured with a plurality of cells comprising a Master Cell Group (MCG) for communications with a master base station, a Secondary Cell Group (SCG) for communications with a secondary base station, and two MAC entities: one MAC entity and for the MCG for communications with the master base station and one MAC entity for the SCG for communications with the secondary base station.

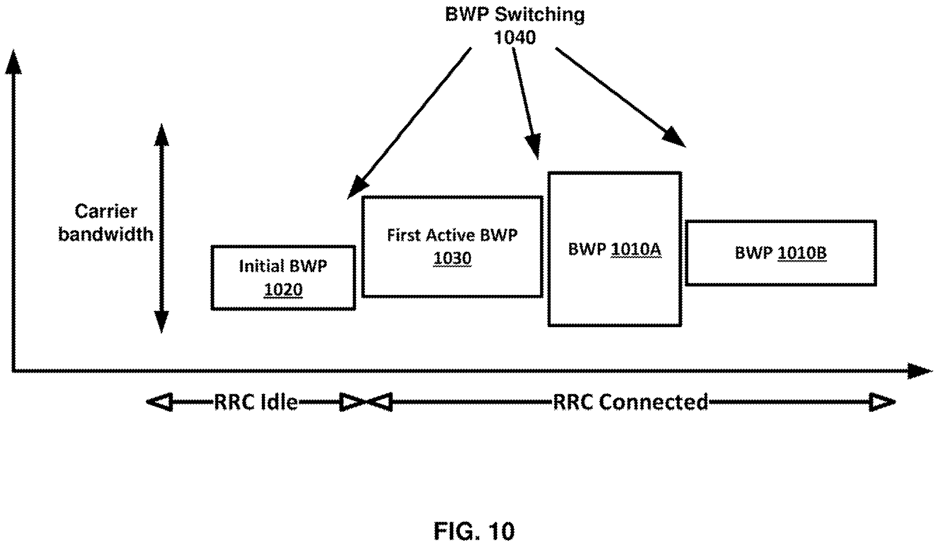

FIG. 10 shows example bandwidth part configuration and switching according to some aspects of some of various exemplary embodiments of the present disclosure. The UE may be configured with one or more Bandwidth Parts (BWPs) 1010 on a given component carrier. In some examples, one of the one or more bandwidth parts may be active at a time. The active bandwidth part may define the UE's operating bandwidth within the cell's operating bandwidth. For initial access, and until the UE's configuration in a cell is received, initial bandwidth part 1020 determined from system information may be used. With Bandwidth Adaptation (BA), for example through BWP switching 1040, the receive and transmit bandwidth of a UE may not be as large as the bandwidth of the cell and may be adjusted. For example, the width may be ordered to change (e.g. to shrink during period of low activity to save power); the location may move in the frequency domain (e.g. to increase scheduling flexibility); and the subcarrier spacing may be ordered to change (e.g. to allow different services). The first active BWP 1020 may be the active BWP upon RRC (re-)configuration for a PCell or activation of an SCell.

For a downlink BWP or uplink BWP in a set of downlink BWPs or uplink BWPs, respectively, the UE may be provided the following configuration parameters: a Subcarrier Spacing (SCS); a cyclic prefix; a common RB and a number of contiguous RBs; an index in the set of downlink BWPs or uplink BWPs by respective BWP-Id; a set of BWP-common and a set of BWP-dedicated parameters. A BWP may be associated with an OFDM numerology according to the configured subcarrier spacing and cyclic prefix for the BWP. For a serving cell, a UE may be provided by a default downlink BWP among the configured downlink BWPs. If a UE is not provided a default downlink BWP, the default downlink BWP may be the initial downlink BWP.

A downlink BWP may be associated with a BWP inactivity timer. If the BWP inactivity timer associated with the active downlink BWP expires and if the default downlink BWP is configured, the UE may perform BWP switching to the default BWP. If the BWP inactivity timer associated with the active downlink BWP expires and if the default downlink BWP is not configured, the UE may perform BWP switching to the initial downlink BWP.

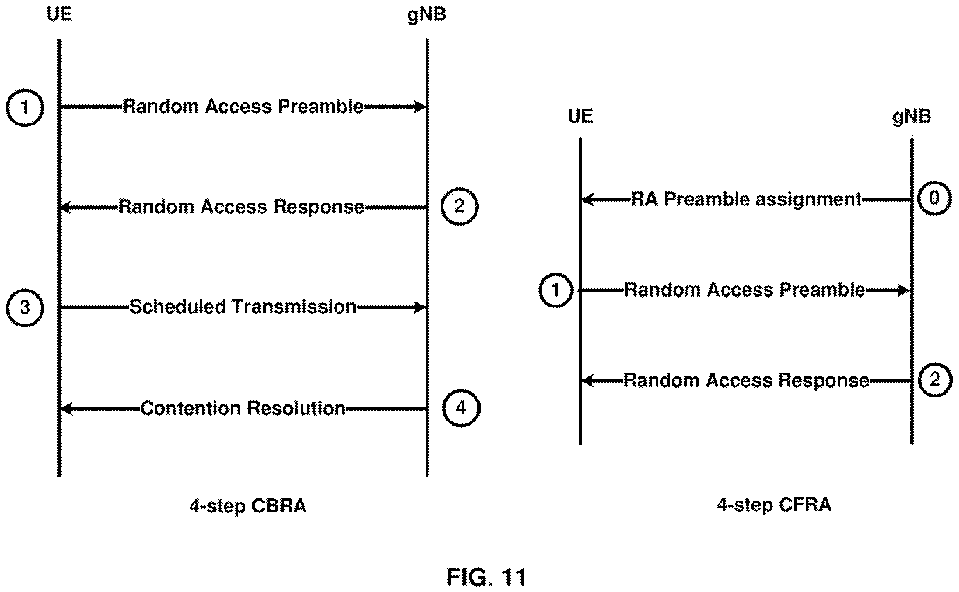

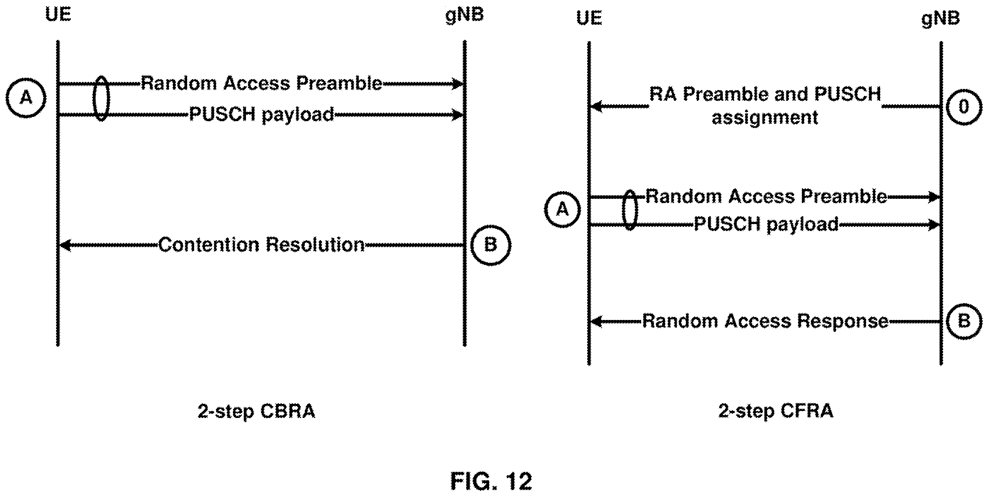

FIG. 11 shows example four-step contention-based and contention-free random access processes according to some aspects of some of various exemplary embodiments of the present disclosure. FIG. 12 shows example two-step contention-based and contention-free random access processes according to some aspects of some of various exemplary embodiments of the present disclosure. The random access procedure may be triggered by a number of events, for example: Initial access from RRC Idle State; RRC Connection Re-establishment procedure; downlink or uplink data arrival during RRC Connected State when uplink synchronization status is "non-synchronized"; uplink data arrival during RRC Connected State when there are no PUCCH resources for Scheduling Request (SR) available; SR failure; Request by RRC upon synchronous reconfiguration (e.g. handover); Transition from RRC Inactive State; to establish time alignment for a secondary TAG; Request for Other System Information (SI); Beam Failure Recovery (BFR); Consistent uplink Listen-Before-Talk (LBT) failure on PCell.

Two types of Random Access (RA) procedure may be supported: 4-step RA type with MSG1 and 2-step RA type with MSGA. Both types of RA procedure may support Contention-Based Random Access (CBRA) and Contention-Free Random Access (CFRA) as shown in FIG. 11 and FIG. 12.

The UE may select the type of random access at initiation of the random access procedure based on network configuration. When CFRA resources are not configured, a RSRP threshold may be used by the UE to select between 2-step RA type and 4-step RA type. When CFRA resources for 4-step RA type are configured, UE may perform random access with 4-step RA type. When CFRA resources for 2-step RA type are configured, UE may perform random access with 2-step RA type.

The MSG1 of the 4-step RA type may consist of a preamble on PRACH. After MSG1 transmission, the UE may monitor for a response from the network within a configured window. For CFRA, dedicated preamble for MSG1 transmission may be assigned by the network and upon receiving Random Access Response (RAR) from the network, the UE may end the random access procedure as shown in FIG. 11. For CBRA, upon reception of the random access response, the UE may send MSG3 using the uplink grant scheduled in the random access response and may monitor contention resolution as shown in FIG. 11. If contention resolution is not successful after MSG3 (re)transmission(s), the UE may go back to MSG1 transmission.

The MSGA of the 2-step RA type may include a preamble on PRACH and a payload on PUSCH. After MSGA transmission, the UE may monitor for a response from the network within a configured window. For CFRA, dedicated preamble and PUSCH resource may be configured for MSGA transmission and upon receiving the network response, the UE may end the random access procedure as shown in FIG. 12. For CBRA, if contention resolution is successful upon receiving the network response, the UE may end the random access procedure as shown in FIG. 12; while if fallback indication is received in MSGB, the UE may perform MSG3 transmission using the uplink grant scheduled in the fallback indication and may monitor contention resolution. If contention resolution is not successful after MSG3 (re)transmission(s), the UE may go back to MSGA transmission.

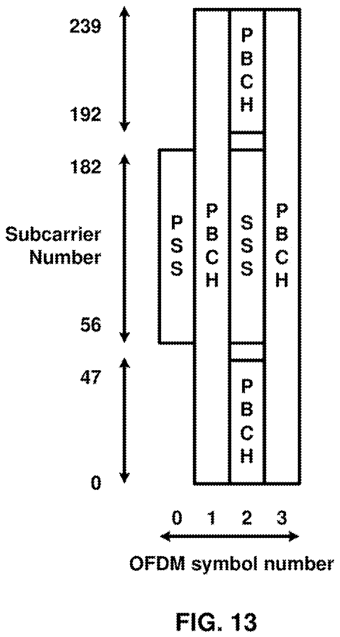

FIG. 13 shows example time and frequency structure of Synchronization Signal and Physical Broadcast Channel (PBCH) Block (SSB) according to some aspects of some of various exemplary embodiments of the present disclosure. The SS/PBCH Block (SSB) may consist of Primary and Secondary Synchronization Signals (PSS, SSS), each occupying 1 symbol and 127 subcarriers (e.g., subcarrier numbers 56 to 182 in FIG. 13), and PBCH spanning across 3 OFDM symbols and 240 subcarriers, but on one symbol leaving an unused part in the middle for SSS as show in FIG. 13. The possible time locations of SSBs within a half-frame may be determined by sub-carrier spacing and the periodicity of the half-frames, where SSBs are transmitted, may be configured by the network. During a half-frame, different SSBs may be transmitted in different spatial directions (i.e., using different beams, spanning the coverage area of a cell).

The PBCH may be used to carry Master Information Block (MIB) used by a UE during cell search and initial access procedures. The UE may first decode PBCH/MIB to receive other system information. The MIB may provide the UE with parameters required to acquire System Information Block 1 (SIB1), more specifically, information required for monitoring of PDCCH for scheduling PDSCH that carries SIB1. In addition, MIB may indicate cell barred status information. The MIB and SIB1 may be collectively referred to as the minimum system information (SI) and SIB1 may be referred to as remaining minimum system information (RMSI). The other system information blocks (SIBs) (e.g., SIB2, SIB3, ..., SIB10 and SIBpos) may be referred to as Other SI. The Other SI may be periodically broadcast on DL-SCH, broadcast on-demand on DL-SCH (e.g., upon request from UEs in RRC Idle State, RRC Inactive State, or RRC connected State), or sent in a dedicated manner on DL-SCH to UEs in RRC Connected State (e.g., upon request, if configured by the network, from UEs in RRC Connected State or when the UE has an active BWP with no common search space configured).

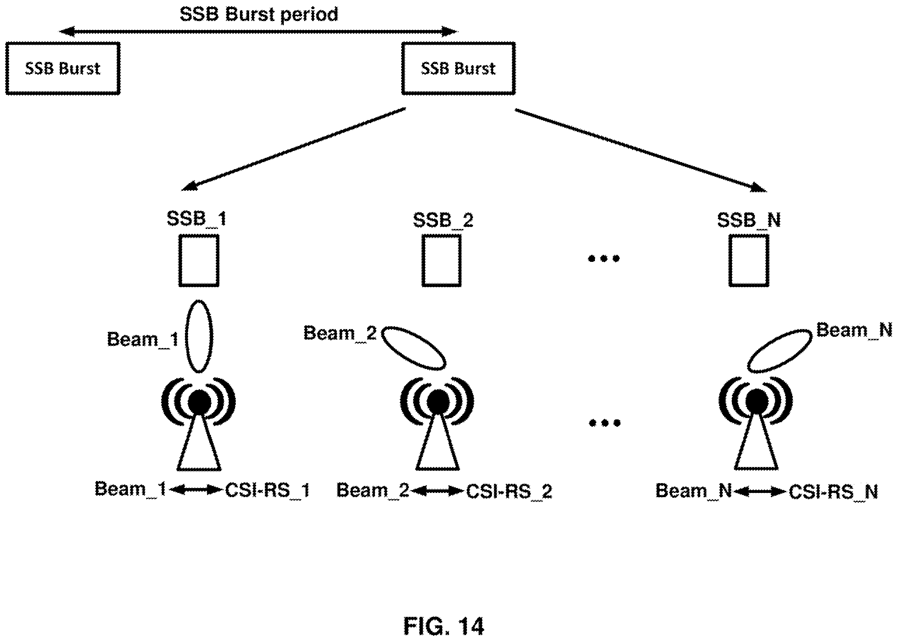

FIG. 14 shows example SSB burst transmissions according to some aspects of some of various exemplary embodiments of the present disclosure. An SSB burst may include N SSBs and each SSB of the N SSBs may correspond to a beam. The SSB bursts may be transmitted according to a periodicity (e.g., SSB burst period). During a contention-based random access process, a UE may perform a random access resource selection process, wherein the UE first selects an SSB before selecting a RA preamble. The UE may select an SSB with an RSRP above a configured threshold value. In some embodiments, the UE may select any SSB if no SSB with RSRP above the configured threshold is available. A set of random access preambles may be associated with an SSB. After selecting an SSB, the UE may select a random access preamble from the set of random access preambles associated with the SSB and may transmit the selected random access preamble to start the random access process.

In some embodiments, a beam of the N beams may be associated with a CSI-RS resource. A UE may measure CSI-RS resources and may select a CSI-RS with RSRP above a configured threshold value. The UE may select a random access preamble corresponding to the selected CSI-RS and may transmit the selected random access process to start the random access process. If there is no random access preamble associated with the selected CSI-RS, the UE may select a random access preamble corresponding to an SSB which is Quasi-Collocated with the selected CSI-RS.

In some embodiments, based on the UE measurements of the CSI-RS resources and the UE CSI reporting, the base station may determine a Transmission Configuration Indication (TCI) state and may indicate the TCI state to the UE, wherein the UE may use the indicated TCI state for reception of downlink control information (e.g., via PDCCH) or data (e.g., via PDSCH). The UE may use the indicated TCI state for using the appropriate beam for reception of data or control information. The indication of the TCI states may be using RRC configuration or in combination of RRC signaling and dynamic signaling (e.g., via a MAC Control element (MAC CE) and/or based on a value of field in the downlink control information that schedules the downlink transmission). The TCI state may indicate a Quasi-Colocation (QCL) relationship between a downlink reference signal such as CSI-RS and the DM-RS associated with the downlink control or data channels (e.g., PDCCH or PDSCH, respectively).

In some embodiments, the UE may be configured with a list of up to M TCI-State configurations, using Physical Downlink Shared Channel (PDSCH) configuration parameters, to decode PDSCH according to a detected PDCCH with DCI intended for the UE and the given serving cell, where M may depends on the UE capability. Each TCI-State may contain parameters for configuring a QCL relationship between one or two downlink reference signals and the DM-RS ports of the PDSCH, the DM-RS port of PDCCH or the CSI-RS port(s) of a CSI-RS resource. The quasi co-location relationship may be configured by one or more RRC parameters. The quasi co-location types corresponding to each DL RS may take one of the following values: 'QCL-TypeA': {Doppler shift, Doppler spread, average delay, delay spread}; 'QCL-TypeB': {Doppler shift, Doppler spread}; 'QCL-TypeC': {Doppler shift, average delay}; 'QCL-TypeD': {Spatial Rx parameter}. The UE may receive an activation command (e.g., a MAC CE), used to map TCI states to the codepoints of a DCI field.

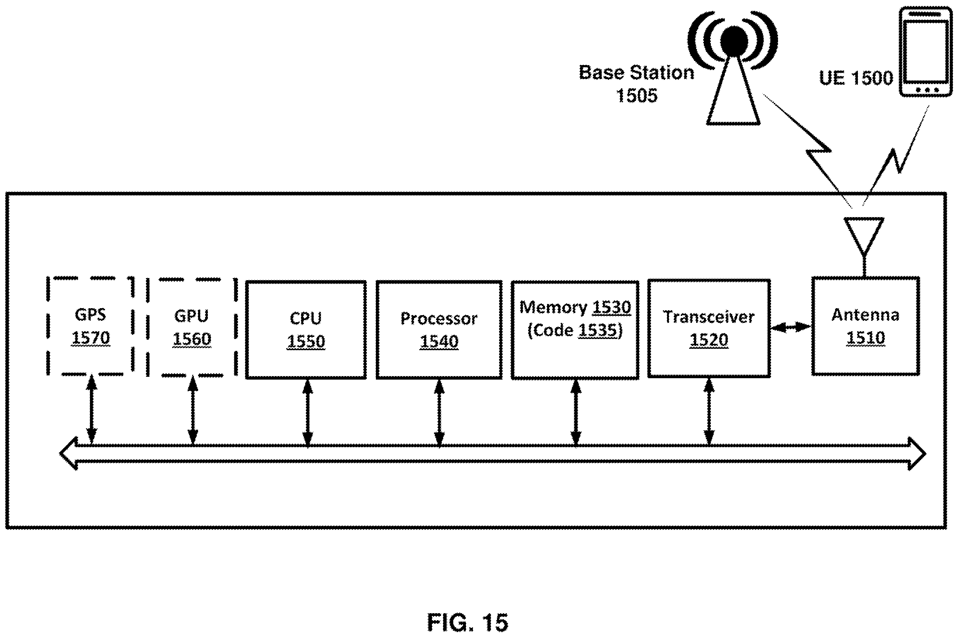

FIG. 15 shows example components of a user equipment and a base station for transmission and/or reception according to some aspects of some of various exemplary embodiments of the present disclosure. All or a subset of blocks and functions in FIG. 15 may be in the base station 1505 and the user equipment 1500 and may be performed by the user equipment 1500 and by the base station 1505. The Antenna 1510 may be used for transmission or reception of electromagnetic signals. The Antenna 1510 may comprise one or more antenna elements and may enable different input-output antenna configurations including Multiple-Input Multiple Output (MIMO) configuration, Multiple-Input Single-Output (MISO) configuration and Single-Input Multiple-Output (SIMO) configuration. In some embodiments, the Antenna 150 may enable a massive MIMO configuration with tens or hundreds of antenna elements. The Antenna 1510 may enable other multi-antenna techniques such as beamforming. In some examples and depending on the UE 1500 capabilities or the type of UE 1500 (e.g., a low-complexity UE), the UE 1500 may support a single antenna only.

The transceiver 1520 may communicate bi-directionally, via the Antenna 1510, wireless links as described herein. For example, the transceiver 1520 may represent a wireless transceiver at the UE and may communicate bi-directionally with the wireless transceiver at the base station or vice versa. The transceiver 1520 may include a modem to modulate the packets and provide the modulated packets to the Antennas 1510 for transmission, and to demodulate packets received from the Antennas 1510.

The memory 1530 may include RAM and ROM. The memory 1530 may store computer-readable, computer-executable code 1535 including instructions that, when executed, cause the processor to perform various functions described herein. In some examples, the memory 1530 may contain, among other things, a Basic Input/output System (BIOS) which may control basic hardware or software operation such as the interaction with peripheral components or devices.

The processor 1540 may include a hardware device with processing capability (e.g., a general purpose processor, a DSP, a CPU, a microcontroller, an ASIC, an FPGA, a programmable logic device, a discrete gate or transistor logic component, a discrete hardware component, or any combination thereof). In some examples, the processor 1540 may be configured to operate a memory using a memory controller. In other examples, a memory controller may be integrated into the processor 1540. The processor 1540 may be configured to execute computer-readable instructions stored in a memory (e.g., the memory 1530) to cause the UE 1500 or the base station 1505 to perform various functions.

The Central Processing Unit (CPU) 1550 may perform basic arithmetic, logic, controlling, and Input/output (I/O) operations specified by the computer instructions in the Memory 1530. The user equipment 1500 and/or the base station 1505 may include additional peripheral components such as a graphics processing unit (GPU) 1560 and a Global Positioning System (GPS) 1570. The GPU 1560 is a specialized circuitry for rapid manipulation and altering of the Memory 1530 for accelerating the processing performance of the user equipment 1500 and/or the base station 1505. The GPS 1570 may be used for enabling location-based services or other services for example based on geographical position of the user equipment 1500.

Example embodiments may enable quality of experience (QoE) measurement collection for different services including streaming services. Example QoE management may collect the experience parameters of streaming services as well as augmented reality/ virtual reality (AR/VR) and URLLC.

In some example embodiments, QoE measurement may enable collecting the user KPI information, e.g., end-to-end (E2E) reliability statistic indicator, etc.

In some examples, different types of UEs may have different QoE requirements. In some examples, QoE parameters may be defined as UE-specific, and service related. In some examples, QoE may be used as a criteria to evaluate network quality. In the past, it was normally used the metrics such as throughput, capacity and coverage for performance evaluations for network solutions. Example embodiments may enable mechanisms of trigger, configuration and reporting for QoE measurement collection, including relevant entities (e.g., UE, network entities).

In some examples, signaling-based and management-based mechanisms may be used for QoE related signaling. In some examples, application layer measurement configuration received from OAM or CN may be encapsulated in a transparent container, which may be forwarded to UE in a downlink RRC message. Application layer measurements received from UE's higher layer may be encapsulated in a transparent container and sent to network in an uplink RRC message.

In some examples, RAN may release an ongoing QoE measurements/reporting configuration, e.g., if handing over to a network that doesn't support this.

In some examples, an area may be defined and/or configured for QoE measurement and/or reporting. In some examples, for the Area Handling the network may keep track of whether the UE is inside or outside the area and may configure/ release configuration accordingly. In some examples, the network may keep track of whether the UE is inside or outside the area, and the UE may manage start stop of QoE accordingly. In some examples, the UE may perform area checking (UE may have the area configuration) and to manage start stop of QoE accordingly.

In some examples, QoE measurements in RRC INACTIVE state may be supported, for MBS. In some examples, QoE measurements in RRC IDLE state may be supported, for MBS.

In some examples, management-based QoE configuration may not override signaling based QoE configuration.

In some examples, QoE reports may be sent via a separate SRB (separate from current SRBs) in NR, as this reporting may be lower priority than other SRB transmissions.

In some examples, configuration and reporting for multiple simultaneous QoE measurements for a UE may be supported.

In some examples, RRC signaling may be used by the gNB to indicate the UE to pause or resume the QoE reporting.

In some examples, the pause/resume may be for all QoE reports or may be per QoE configuration.

In some examples, QoE measurements may be configured in an RRCReconfiguration message.

In some examples, configuration of QoE measurements may be in a OtherConfig information element in an RRCReconfiguration message.

In some examples, the configuration of QoE measurements may be by means of a list (e.g., an RRC list parameter) to enable configuration of multiple simultaneous measurements.

In some examples, for RRC an ID may be used to identify a measurement. In some examples, this ID may be the QoE reference ID.

In some examples, SRB4 may be used for transmission of QoE reports in NR.

In some examples, an RRC message MeasReportAppLayer may be used for the transmission of QoE reports in NR.

In some examples, QoE support for NR may include: activation by Trace Function, both signaling and management-based configuration and RRC procedures supporting AppLayer config and report.

In some examples, the UE may follow gNB commands and, NG-RAN may release by RRC the application layer measurement configuration towards the UE at any time, e.g., if required due to load or other reasons.

In some examples, the UE Inactive access stratum (AS) context may include the UE AS configuration for the QoE (for examples, it may not be released when UE goes to Inactive).

In some examples, "QoE pause" indication from the network may be used to temporarily stop QoE reports from being sent from the UE to the network.

In some examples, for QoE report handling during RAN overload via "QoE report pause indication": application layer may be responsible for storing QoE reports when the UE receives QoE pause indication.

In some examples, for QoE report handling during RAN overload via "QoE report pause indication": AS layer may be responsible for storing QoE reports when the UE receives QoE pause indication.

In some examples, for QoE report handling during RAN overload via "QoE report pause indication": the QoE container received from application layer may be discarded during pause.

In some examples, application layer measurement collection function may enable collection of application layer measurements from the UE. Example supported service types may be QoE measurement collection for services such as streaming services, etc. Both signalling based and management-based initiation cases may be used. For the signaling-based case, the Application Layer Measurement Collection may be initiated towards a specific UE from CN nodes; for the management-based case, the Application Layer Measurement Collection may be initiated from OAM targeting an area (e.g., without targeting a specific UE).

Application layer measurement configuration received from OAM or CN may be encapsulated in a transparent container, which may be forwarded to UE in a downlink RRC message. Application layer measurements received from UE's higher layer may be encapsulated in a transparent container and sent to network in an uplink RRC message. The network may release the application layer measurement configuration towards the UE at any time.

In some examples, for URLLC service, E2E delay may be critical, and operators may monitor and guarantee the delay measurement.

In some examples, the QoE management framework may exist in two flavors: Signaling-based QoE, and Management-based QoE. In the signaling based QoE, the QoE measurement configuration (QMC) may be delivered to the RAN node. The QMC may specify the area scope for the measurement, where the area scope may be defined via a list or cells/TAs/TAIs/PLMNs. In the Management-based QoE, the OAM may deliver the QMC to the RAN node.

In some examples, a threshold-based mechanism to trigger the start and stop of QoE measurement collection may be used. In some examples, a time-based event may be used for activation of QoE measurement to enable the flexibility of QoE measurement activation within a certain period of predefined time.

In some examples, upon receiving a "pause" indication from the network, the UE may stop QoE reporting, but may continue QoE measurements.

In some examples, "QoE pause" indication from the network may be used to temporarily stop QoE reports from being sent to the network, but it may not affect the QoE measurements collection at the UE. For example, the UE may continue ongoing QoE measurements and may trigger new ones at the application layer (e.g., as per QoE configurations stored at the UE).

In some examples, in case of overload in RAN, the base station may temporarily stop the reporting from the UE by sending an RRC message (e.g., an RRCConnectionReconfiguration message) to relevant UEs. The RRCConnectionReconfiguration message may include measConfigappLayer set to temporarily stop application layer measurement reporting in otherConfig. In some examples, the Access stratum may send a command to the application with the temporary stop request. The application may stop the reporting and may stop recording further information when the data in the reporting container is used. Then the recorded data may be kept until it is reported or when the UE request session is ended.

In some examples, when the overload situation in RAN is ended the base station may restart the reporting from the UE by sending an RRC message (e.g., the RRCConnectionReconfiguration message) to relevant UEs. The RRCConnectionReconfiguration message may include measConfigAppLayer set to restart application layer measurement reporting in otherConfig. The Access stratum may send a command to the application with the restart request. The application may restart the reporting and recording if it was stopped.

In some examples, QoE measurement handling in RRC_INACTIVE may be based on keeping the QoE measurement configuration without measuring and reusing the same configuration upon transition from RRC_INACTIVE to RRC_CONNECTED.

In some examples, RRC segmentation may be needed for transmission of QoE reports.

In some examples, when QoE measurements are configured, a configuration container may be sent from OAM and transmitted to the UE as a transparent container in an RRC reconfiguration message. The container may be forwarded to the application layer in the UE by means of AT commands. When the application has a report to send, it may be communicated to the RRC layer in the UE by means of AT commands and transmitted to the network in an RRC message. The gNB may forward it to a measurement collection entity which may analyze the measurements.

In some examples, the core network (CN) may initiate the activation of the QoE measurement configured by OAM and may send the QoE measurement configuration to the NG-RAN node. UE AS layer may send the QoE measurement configuration to UE application layer.

In some examples, the UE application layer may generate the QoE report and may send it to the UE AS layer. UE AS layer may send the QoE report to NG-RAN node via a separate signalling radio bearer (SRB). In some examples, this reporting may have lower priority than other SRB transmissions. The NG-RAN node may transmit the QoE report to the final destination configured (e.g., TCE/MCE).

In some examples, the QoE measurements may be configured in an RRCReconfiguration message. In some examples, configuration of QoE measurements may be in OtherConfig in RRCReconfiguration.

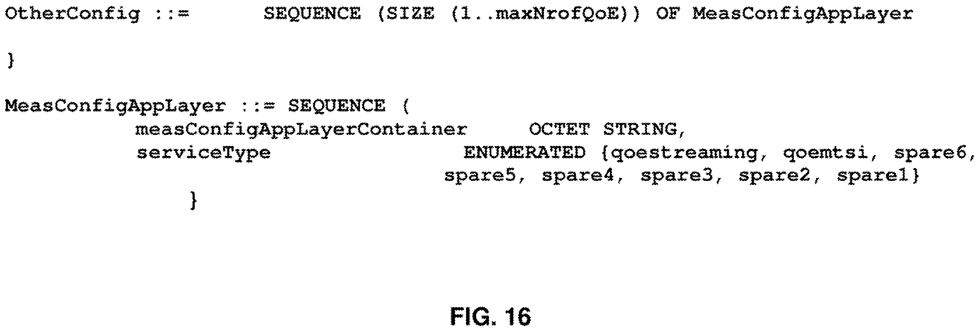

In some examples, it may be possible to configure several simultaneous QoE measurements in the UE. In some examples, the measurements may be RRC configured by means of a list. In some examples, the configuration of QoE measurements by means of a list may be used to utilize configuration of multiple simultaneous measurements. An example of QoE configuration to RRCReconfiguration as part of OtherConfig is shown in FIG. 16.

In some examples, there may be assurance and other automated functions using the QoE measurement collection (QMC) mechanism. The functionality to provide QoE Reference both inside and outside the container to enable multiple simultaneous measurements and the temporary stop/restart QMCs may be needed. In some examples, as multiple assurance and automation functions may need to have different QoE data from the same UE, multiple simultaneous QMCs from each UE may be needed. In some examples, when multiple QMCs are ordered by different consumers, the reported data may need to be sent to different consumers. The base station may need to have a mapping of the QoE Reference and the consumer address. The base station may not need to open the report container and may decode the data to find the QoE Reference.

In some examples, a QoE Reference may be used to link the reports to a specific configuration, so that the gNB may know where to forward the report.

In some examples, the QoE reference parameter may specify the network request session. The QoE reference may be globally unique. In some examples, it may be composed as follows: MCC+MNC+QMC ID, where the MCC and MNC may be coming with the trace activation request from the management system to identify one PLMN containing the management system, and QMC ID may be a 3-byte Octet String. In some examples, the QMC ID may be generated by the management system or the operator. In some examples, it may be used to identify the QoE measurement collection job in the traffic nodes and in the measurement collection center. In some examples, QoE Reference may be configured together with the QoE configuration.

In some examples, RRC messages containing the QoE files can be quite large. In some examples, there may be a limit for the QoE configuration.

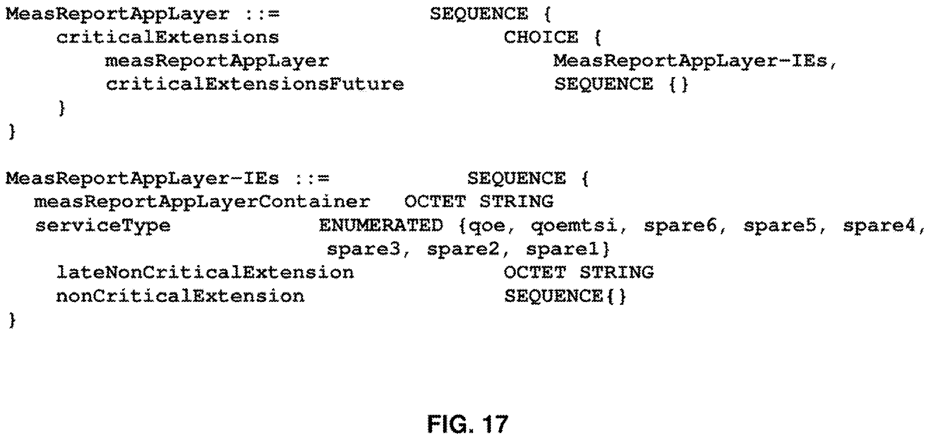

In some examples, the QoE reports may be sent in a separate RRC message, MeasReportAppLayer. A MeasReportAppLayer message may be used for the indication of measurement results. An example is shown in FIG. 17.

In some examples, for the reporting, the QoE reference would need to be added, as the purpose of the QoE Reference may be to be used in the gNB for routing of the report to the correct recipient. In some examples, the UE may send QoE Reference in the RRC message together with the QoE report.

Quality of Experience (QoE) measurement and reporting is an important functionality for various services and applications including streaming, virtual/augmented reality (VR/AR) and URLLC applications. A plurality of QoE configurations may be configured for a UE. A QoE configuration may comprise parameters for QoE measurements and/or QoE reporting. For certain applications/ QoE configurations, QoE measurements may be required to be performed by the UE during the RRC Inactive state and may be required to be transmitted upon transitioning of the UE to an RRC connected state. Existing QoE mechanisms may not support QoE measurements during the RRC inactive state. Example embodiments enable and/or enhance processes for the QoE measurement during the RRC inactive state.

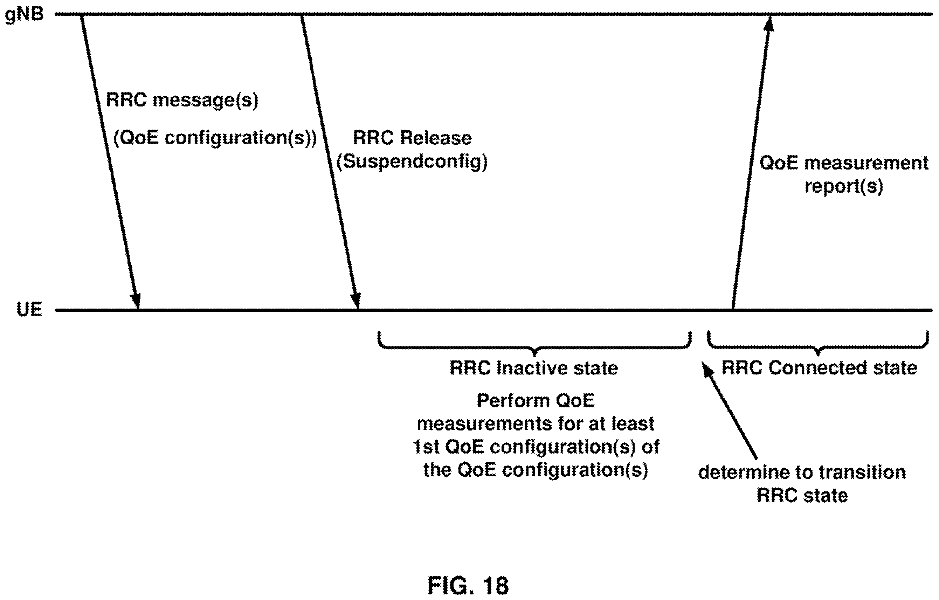

In an example embodiment as shown in FIG. 18, a UE may receive one or more RRC messages (e.g., comprising one or more RRC reconfiguration messages) comprising configuration parameters of one or more QoE configurations. In some examples, some of the parameters of the one or more QoE configurations may be common among the one or more configurations. In some examples, at least a portion of the parameters of a QoE configuration may be specific to that QoE configuration. In some examples, a QoE configuration, in the one or more QoE configuration, may be identified/associated with an identifier. In some examples, the configuration parameters of the one or more QoE configurations may comprise identifiers (e.g., parameters indicating the identifiers) associated with the one or more QoE configurations. The one or more QoE configuration parameters may comprise one or more first parameters that are used by the UE for QoE measurements and/or generating QoE reports. For example, the one or more first parameters may indicate one or more applications for which QoE is measured and/or may indicate measurement parameters/KPIs to be used by the UE to perform the QoE measurements. The one or more QoE configuration parameters may comprise one or more second parameters (e.g., periodicity, size of the QoE report, etc.) that are used by the UE for reporting QoE reports.

While in the RRC connected state, the UE may receive an RRC release message. The RRC release message may indicate transitioning of the UE from the RRC connected state to an RRC inactive state. For example, the RRC release message may comprise a suspend config IE indicating transitioning of the UE from the RRC connected state to the RRC inactive state. The suspend config IE may comprise configuration parameters to be used by the UE for operation of the UE during the RRC inactive state. For example, the suspend config IE may comprise parameters for RAN notification area (RNA) update (RNAU), one or more RNTIs (e.g., a short RNTI and a full RNTI) for operation during the RRC inactive state, a RAN paging cycle, one or more timer values (e.g., a timer associated with RNAU), etc. In response to receiving the RRC release message and based on the RRC release message comprising the suspend config IE, the UE may transition from the RRC connected state to the RRC inactive state.

The UE may perform QoE measurements while in the RRC inactive state. The UE may perform the QoE measurements for one or more first QoE configurations of the one or more QoE configurations. In some examples, the one or more first QoE configurations may be selected (e.g., by the base station) from the one or more QoE configurations. The selection of the one or more first QoE configurations may be based on applications associated with the one or more first QoE configurations and/or based on whether QoE measurement is required for the corresponding configurations/applications while in the RRC inactive state. In some examples, the UE may determine the one or more first QoE configurations in the one or more QoE configurations based on and/or in response to the RRC release message. For example, the RRC release message (e.g., a suspendconfig IE in the RRC release message) may indicate the one or more first QoE configurations, for example, one or more parameters in the RRC release message may indicate one or more first identifiers of the one or more first QoE configurations. For example, the RRC release message may comprise a list parameter (e.g., an RRC parameter of list type) indicating (e.g., by indicating the identifiers of) the one or more first QoE configurations. In some examples, the UE may perform the QoE measurements for the one or more first QoE configurations and may store the QoE measurements in the corresponding QoE reports. The UE may transmit the corresponding QoE reports after (e.g., in response to) transitioning from the RRC inactive state to the RRC connected state.

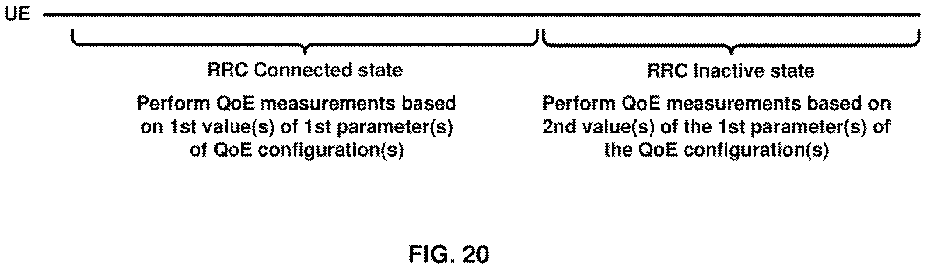

In some examples, the RRC release message may indicate an update/ reconfiguration to one or more configuration parameters (e.g., one or more QoE configurations used for QoE measurements) of a QoE configuration. For example, a parameter of a QoE configuration may have a first value for the UE (e.g., for QoE measurements) when the UE operates in the RRC connected state and may have a second value for the UE (e.g., for QoE configuration) when the UE operates in the RRC inactive state. An example is shown in FIG. 20. In some examples, the RRC release message may comprise one or more offset parameters wherein the UE may determine a second value of the parameter of the QoE configuration based on the first value of the parameter in the RRC connected state and an offset parameter. In some examples, the RRC release message may indicate at least one index wherein the index may identify new values of one or more parameters of the QoE configuration while the UE is in the RRC inactive state.

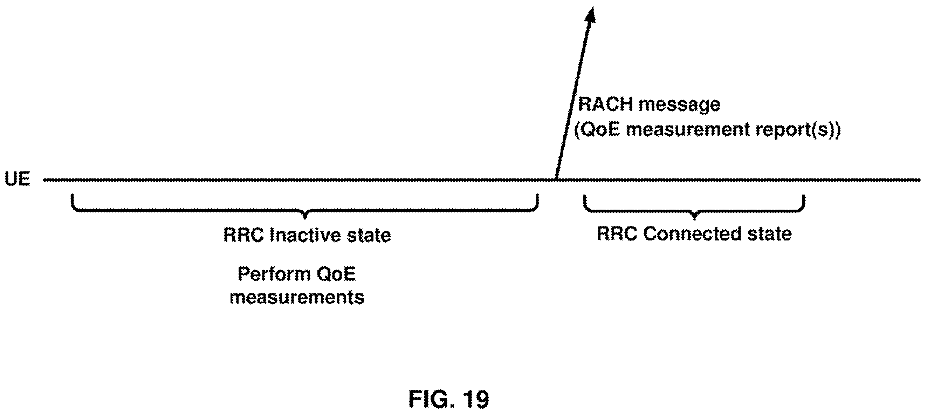

The UE may determine to transition from the RRC inactive state to an RRC connected state. For example, the UE may receive application layer data triggering the transitioning from the RRC inactive state to the RRC connected state. In response to the determining to transition to the RRC connected state from the RRC inactive state, the UE may transmit one or more QoE measurement reports. In some examples, the one or more QoE measurement reports may be based on QoE measurements performed while the UE is in the RRC inactive state. A QoE measurement report may be associated with an identifier. In some examples, the QoE measurement report may comprise a parameter indicating the identifier associated with the QoE measurement/ report. The identifier associated with the QoE report may be used by RAN/gNB to forward the QoE report to a corresponding recipient. The UE may transmit the one or more QoE reports based on one or more RRC messages (e.g., comprising a MeasrementReportAppLayer message). The one or more QoE reports may be associated with a first signaling radio bearer (e.g., SRB4). In some examples, the first SRB may have a lower priority compared for one or more second SRBs (e.g., SRBs associated with other indications/ reports (e.g., RLF, etc.) that are transmitted by the UE via RRC signaling). The UE may multiplex the one or more QoE reports in an uplink transport block, wherein multiplexing the one or more QoE reports may be based on the priority of the first SRB (e.g., using a logical channel prioritization procedure at the MAC layer). The one or more QoE measurement reports may be associated with the one or more first QoE configurations. For example, the one or more QoE measurement reports may be based on measurements performed by the UE during the RRC inactive state. In some examples, the UE may store the one or more QoE measurement reports while the UE is in the RRC inactive state and may transmit the one or more stored QoE measurement reports after the transition to the RRC connected state. In some examples, the UE may transition from the RRC inactive state to the RRC connected state based on a random access process. In an example as shown in FIG. 19, the UE may transmit the one or more QoE reports based on a random access message of the random access process, for example, based on a Msg 3 in a four-step random access process or based on a Msg A in a two-step random access process. In some examples, the UE may transmit the one or more QoE measurement reports based on an uplink grant (e.g., a configured grant or a dynamic grant) received by the UE after transitioning from the RRC inactive state to the RRC connected state.

In some examples, the UE may receive signaling (e.g., physical layer signaling received via a control channel, a MAC CE or RRC signaling) indicating pause/resume of the QoE measurement reports and/or pause/resume of performing QoE measurements. In some examples, the pause/resume signaling may be received by the UE in the RRC connected state (e.g., after transitioning of the UE from the RRC idle state to the RRC connected state or before transitioning of the UE to the RRC inactive state). In some examples, the pause/resume signaling may be received by the UE in both RRC inactive state (for example for pausing/resuming measurement, e.g., via paging) and the RRC connected state.

In an example embodiment, a user equipment (UE) may receive a radio resource control (RRC) message comprising configuration parameters of one or more QoE configurations. The UE may receive an RRC release message indicating transitioning of the UE from an RRC connected state to an RRC inactive state. The UE may perform QoE measurements at least for one or more first QoE configurations of the one or more QoE configurations while the UE is in the RRC inactive state. The UE may determine to transition from the RRC inactive state to the RRC connected state. The UE may transmit one or more QoE measurement reports in response to the determining to transition.

In some examples, the UE may transition from the radio resource control (RRC) connected state to the RRC inactive state in response to receiving the RRC release message.

In some examples, the RRC release message may comprise a suspendconfig information element (IE). The suspendconfig IE may comprise configuration parameters for operation of the user equipment (UE) in the RRC inactive state.

In some examples, each quality of experience (QoE) configuration, in the one or more QoE configurations, may be associated with an identifier. The configuration parameters, of the one or more QoE configurations, may indicate identifiers of the one or more quality of experience (QoE) configurations. In some examples, each quality of experience (QoE) configuration, in the one or more QoE configurations, may comprise a parameter indicating a corresponding identifier for the QoE configuration. In some examples, the RRC release message may indicate one or more first identifiers, of the one or more identifiers, that are associated with the one or more first QoE configurations.

In some examples, the radio resource control (RRC) release message may comprise a suspendconfig information element (IE) indicating transitioning of the user equipment (UE) to the RRC inactive state. In some examples, the suspendconfig information element (IE) may indicate one or more first identifiers associated with the one or more first quality of experience (QoE) configurations. In some examples, the suspendconfig information element (IE) may comprise a parameter indicating a list of the one or more first quality of experience (QoE) measurement configurations.

In some examples, configuration parameters, in a quality of experience (QoE) configuration, may comprise first parameters for QoE measurement and second parameters for QoE reporting. In some examples, the first parameters may indicate one or more applications for quality of experience (QoE) measurement. In some examples, the second parameters may indicate one or more periodicities for quality of experience (QoE) reporting.

In some examples, transitioning from the radio resource control (RRC) inactive state to the RRC connected state may comprise initiating a random access process. The transmitting the one or more quality of experience (QoE) measurement reports may be via a random access message of the random access process. In some examples, the random access message may be a Msg3 message when the random access process is a four-step random access process. In some examples, the random access message may be a MsgA message when the random access process is a two-step random access process.

In some examples, transmitting the one or more quality of experience (QoE) measurement reports may be based on an uplink grant after the transitioning from the radio resource control (RRC) inactive state to the RRC connected state. In some examples, the UE may receive the uplink grant after transitioning from the radio resource control (RRC) inactive state to the RRC connected state.

In some examples, a first configuration parameter, of a first quality of experience (QoE) configuration of the one or more first QoE configurations may be associated with: a first value while the user equipment (UE) is in the radio resource control (RRC) connected state; and a second value while the UE is in the RRC inactive state.

In some examples, transmitting the one or more quality of experience (QoE) measurement reports may be via one or more radio resource control (RRC) messages. In some examples, the one or more radio resource control (RRC) messages may be associated with a signaling radio bearer four (SRB4). In some examples, the one or more radio resource control (RRC) messages may comprise a MeasurementReportAppLayer message.

In some examples, at least some configuration parameters of the configuration parameters, of the one or more quality of experience (QoE) configurations, may be the same.

In some examples, a measurement report, in the one or more measurement reports, may comprise a measurement identifier. The measurement identifier may indicate a quality of experience (QoE) configuration, in the one or more QoE configurations, that the measurement report may be associated with. In some examples, the measurement identifier may be used by radio access network (RAN) for forwarding the measurement report to a corresponding recipient.

In some examples, the UE may receive, after transitioning to the RRC connected state, a pause indication indicating pausing quality of experience (QoE) measurement reports. In some examples, the pause indication may be a physical layer message. In some examples, receiving the physical layer message may be via a downlink control channel. In some examples, the pause indication message may be via a medium access control (MAC) control element (CE). In some examples, the pause indication may be via a radio resource control (RRC) message. In some examples, quality of experience (QoE) measurements may be performed while pausing the QoE measurement reports.

In some examples, the UE may receive, after transitioning to the RRC connected state, a resume indication indicating resuming quality of experience (QoE) measurement reports. In some examples, the resume indication may be a physical layer message. In some examples, receiving the physical layer message may be via a downlink control channel. In some examples, the resume indication message may be via a medium access control (MAC) control element (CE). In some examples, the resume indication may be via a radio resource control (RRC) message.

In some examples, the one or more first quality of experience (QoE) configurations may be selected from the one or more QoE configurations based on requirement for QoE measurements during the radio resource control (RRC) inactive state.

In some examples, the one or more first quality of experience (QoE) configurations may be selected from the one or more QoE configurations based on requirement for QoE reports in response to transitioning from the radio resource control (RRC) inactive state to the RRC connected state.

In some examples, transmitting the one or more quality of experience (QoE) measurement reports may be based on the one or more first QoE configurations.

In some examples, the radio resource control (RRC) message may be a RRC reconfiguration message.

In some examples, the UE may store the one or more quality of experience (QoE) measurement reports while the UE is in the RRC inactive state.

The exemplary blocks and modules described in this disclosure with respect to the various example embodiments may be implemented or performed with a general-purpose processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. Examples of the general-purpose processor include but are not limited to a microprocessor, any conventional processor, a controller, a microcontroller, or a state machine. In some examples, a processor may be implemented using a combination of devices (e.g., a combination of a DSP and a microprocessor, multiple microprocessors, one or more microprocessors in conjunction with a DSP core, or any other such configuration).

The functions described in this disclosure may be implemented in hardware, software executed by a processor, firmware, or any combination thereof. Instructions or code may be stored or transmitted on a computer-readable medium for implementation of the functions. Other examples for implementation of the functions disclosed herein are also within the scope of this disclosure. Implementation of the functions may be via physically co-located or distributed elements (e.g., at various positions), including being distributed such that portions of functions are implemented at different physical locations.

Computer-readable media includes but is not limited to non-transitory computer storage media. A non-transitory storage medium may be accessed by a general purpose or special purpose computer. Examples of non-transitory storage media include, but are not limited to, random access memory (RAM), read-only memory (ROM), electrically erasable programmable ROM (EEPROM), flash memory, compact disk (CD) ROM or other optical disk storage, magnetic disk storage or other magnetic storage devices, etc. A non-transitory medium may be used to carry or store desired program code means (e.g., instructions and/or data structures) and may be accessed by a general-purpose or special-purpose computer, or a general-purpose or special-purpose processor. In some examples, the software/ program code may be transmitted from a remote source (e.g., a website, a server, etc.) using a coaxial cable, fiber optic cable, twisted pair, digital subscriber line (DSL), or wireless technologies such as infrared, radio, and microwave. In such examples, the coaxial cable, fiber optic cable, twisted pair, DSL, or wireless technologies such as infrared, radio, and microwave are within the scope of the definition of medium. Combinations of the above examples are also within the scope of computer-readable media.

As used in this disclosure, use of the term "or" in a list of items indicates an inclusive list. The list of items may be prefaced by a phrase such as "at least one of' or "one or more of'. For example, a list of at least one of A, B, or C includes A or B or C or AB (i.e., A and B) or AC or BC or ABC (i.e., A and B and C). Also, as used in this disclosure, prefacing a list of conditions with the phrase "based on" shall not be construed as "based only on" the set of conditions and rather shall be construed as "based at least in part on" the set of conditions. For example, an outcome described as "based on condition A" may be based on both a condition A and a condition B without departing from the scope of this disclosure.

In this specification the terms "comprise", "include" or "contain" may be used interchangeably and have the same meaning and are to be construed as inclusive and open-ending. The terms "comprise", "include" or "contain" may be used before a list of elements and indicate that at least all of the listed elements within the list exist but other elements that are not in the list may also be present. For example, if A comprises B and C, both {B, C} and {B, C, D} are within the scope of A.

The present disclosure, in connection with the accompanied drawings, describes example configurations that are not representative of all the examples that may be implemented or all configurations that are within the scope of this disclosure. The term "exemplary" should not be construed as "preferred" or "advantageous compared to other examples" but rather "an illustration, an instance or an example." By reading this disclosure, including the description of the embodiments and the drawings, it will be appreciated by a person of ordinary skills in the art that the technology disclosed herein may be implemented using alternative embodiments. The person of ordinary skill in the art would appreciate that the embodiments, or certain features of the embodiments described herein, may be combined to arrive at yet other embodiments for practicing the technology described in the present disclosure. Thus, the disclosure is not limited to the examples and designs described herein but is to be accorded the broadest scope consistent with the principles and novel features disclosed herein.

## Claims

1. A method performed by a user equipment, UE, (1500) for quality of experience, OoE, measurement and reporting, wherein the QoE measurements are application layer measurements associated with one or more service types, the method comprising the steps of:
receiving a radio resource control, RRC, message comprising one or more QoE measurement configurations;
performing, in an RRC connected state, first QoE measurements based on at least one first QoE configuration parameter of the one or more QoE measurement configurations;
receiving an RRC release message indicating transitioning of the UE (1500) from an RRC connected state to an RRC inactive state;
performing, in the RRC inactive state, second QoE measurements based on at least one second QoE configuration parameter of the one or more QoE measurement configurations;
storing, in the RRC inactive state, one or more QoE measurement reports based on the QoE second measurements;
determining to transition from the RRC inactive state to the RRC connected state; and
transmitting the one or more QoE measurement reports that are stored during the RRC inactive state after transitioning to the RRC connected state.

2. The method of claim 1, further comprising transitioning from the RRC connected state to the RRC inactive state in response to receiving the RRC release message.

3. The method of claim 1 or 2, wherein:
the RRC release message comprises a suspendconfig information element, IE; and
the suspendconfig IE comprises configuration parameters for operation of the UE (1500) in the RRC inactive state.

4. The method of any of claims 1 to 3, wherein:
transmitting the one or more QoE measurement reports is via one or more RRC messages.

5. The method of claim 4, wherein:
the one or more RRC messages are associated with a signaling radio bearer four, SRB4.

6. A user equipment, UE (1500) configured for quality of experience, OoE, measurement and reporting, wherein the QoE measurements are application layer measurements associated with one or more service types, the UE comprising:
receiving means configured to receive a radio resource control, RRC, message comprising one or more QoE measurement configurations;
performing means configured to perform, in an RRC connected state, first QoE measurements based on at least one first QoE configuration parameter of the one or more QoE measurement configurations,
wherein the receiving means is further configured to receive an RRC release message indicating transitioning of the UE from the RRC connected state to an RRC inactive state, and
wherein the performing means is further configured to perform, in the RRC inactive state, second QoE measurements based on at least one second QoE configuration parameter of the one or more QoE measurement configurations;
storing means configured to store, in the RRC inactive state, one or more QoE measurement reports based on the second QoE measurements;
determining means configured to determine to transition from the RRC inactive state to the RRC connected state; and
transmitting means configured to transmit, after transitioning from the RRC inactive state to the RRC connected state, the one or more QoE measurement reports that are stored during the RRC inactive state.

7. A method performed by a base station (1505) for quality of experience, QoE, measurement and reporting, wherein the QoE measurements are application layer measurements associated with one or more service types, the method comprising the steps of:
transmitting a radio resource control, RRC, message comprising one or more QoE measurement configurations, the one or more QoE measurement configurations comprising at least one first QoE configuration parameter for a user equipment, UE, to use for first QoE measurements in an RRC connected state and at least one second QoE configuration parameter for the UE to use for the second QoE measurements in an RRC inactive state;
transmitting an RRC release message indicating transitioning of the UE from the RRC connected state to the RRC inactive state; and
receiving, after transitioning of the UE from the RRC inactive state to the RRC connected state, one or more QoE measurement reports that are stored by the UE during the RRC inactive state.

8. A base station (1505) configured for quality of experience, QoE, measurement and reporting, wherein the QoE measurements are application layer measurements associated with one or more service types, the base station comprising:
transmitting means configured to transmit a radio resource control, RRC, message comprising one or more quality of experience, QoE, measurement configurations, the one or more QoE measurement configurations comprising at least one first QoE configuration parameter for a user equipment, UE, to use for first QoE
measurements in an RRC connected state and at least one second QoE configuration parameter for the UE to use for the second QoE measurements in an RRC inactive state;
wherein the transmitting means is further configured to transmit an RRC release message indicating transitioning of the UE from the RRC connected state to the RRC inactive state; and
receiving means configured to receive, after transitioning of the UE from the RRC inactive state to the RRC connected state, the one or more QoE measurement reports that are stored by the UE during the RRC inactive state.

## Patentansprüche

1. Verfahren, das von einem Endgerät, UE, (1500) zur Messung und Meldung einer Erlebnisqualität, QoE, ausgeführt wird, wobei die QoE-Messungen Messungen auf Anwendungsebene sind, die einer oder mehreren Dienstarten zugeordnet sind, wobei das Verfahren folgende Schritte umfasst:
Empfangen einer Funkressourcensteuerungs-, RRC, Nachricht, die eine oder mehrere QoE-Messkonfigurationen umfasst;
Ausführen, in einem angeschlossenen Zustand der RRC, von ersten QoE-Messungen basierend auf mindestens einem ersten QoE-Konfigurationsparameter der einen oder mehreren QoE-Messkonfigurationen;
Empfangen einer RRC-Freigabenachricht, die den Übergang des UEs (1500) von einem angeschlossenen Zustand der RRC auf einen inaktiven Zustand der RRC angibt;
Ausführen, in dem inaktiven Zustand der RRC, von zweiten QoE-Messungen basierend auf mindestens einem zweiten QoE-Konfigurationsparameter der einen oder mehreren QoE-Messkonfigurationen;
Speichern, in dem inaktiven Zustand der RRC, eines oder mehrerer QoE-Messberichte basierend auf den zweiten QoE-Messungen;
Bestimmen, von dem inaktiven Zustand der RRC auf den angeschlossenen Zustand der RRC überzugehen; und
Übertragen des einen oder der mehreren QoE-Messberichte, die während des inaktiven Zustands der RRC nach dem Übergang auf den angeschlossenen Zustand der RRC gespeichert werden.

2. Verfahren nach Anspruch 1, ferner umfassend das Übergehen von dem angeschlossenen Zustand der RRC auf den inaktiven Zustand der RRC als Reaktion auf das Empfangen der RRC-Freigabenachricht.

3. Verfahren nach Anspruch 1 oder 2, wobei:
die RRC-Freigabenachricht ein Informationselement, IE, suspendconfig umfasst; und
das suspendconfig-IE Konfigurationsparameter zum Betrieb des UEs (1500) in dem inaktiven Zustand der RRC umfasst.

4. Verfahren nach einem der Ansprüche 1 bis 3, wobei:
das Übertragen des einen oder der mehreren QoE-Messberichte über eine oder mehrere RRC-Nachrichten erfolgt.

5. Verfahren nach Anspruch 4, wobei:
die eine oder mehreren RRC-Nachrichten einem Signalisierungsfunkträger Vier, SRB4, zugeordnet sind.

6. Endgerät, UE, (1500), das zur Messung und Meldung einer Erlebnisqualität, QoE, konfiguriert ist, wobei die QoE-Messungen Messungen auf Anwendungsebene sind, die einer oder mehreren Dienstarten zugeordnet sind, wobei das UE umfasst:
Empfangsmittel, die dazu konfiguriert sind, eine Funkressourcensteuerungs-, RRC, Nachricht zu empfangen, die eine oder mehrere QoE-Messkonfigurationen umfasst;
Ausführungsmittel, die dazu konfiguriert sind, in einem angeschlossenen Zustand der RRC erste QoE-Messungen basierend auf mindestens einem ersten QoE-Konfigurationsparameter der einen oder mehreren QoE-Messkonfigurationen auszuführen,
wobei die Empfangsmittel ferner dazu konfiguriert sind, eine RRC-Freigabenachricht zu empfangen, die den Übergang des UEs von dem angeschlossenen Zustand der RRC auf einen inaktiven Zustand der RRC angibt, und
wobei die Ausführungsmittel ferner dazu konfiguriert sind, in dem inaktiven Zustand der RRC zweite QoE-Messungen basierend auf mindestens einem zweiten QoE-Konfigurationsparameter der einen oder mehreren QoE-Messkonfigurationen auszuführen;
Speichermittel, die dazu konfiguriert sind, in dem inaktiven Zustand der RRC einen oder mehrere QoE-Messberichte basierend auf den zweiten QoE-Messungen zu speichern;
Bestimmungsmittel, die dazu konfiguriert sind, zu bestimmen, von dem inaktiven Zustand der RRC auf den angeschlossenen Zustand der RRC überzugehen; und
Übertragungsmittel, die dazu konfiguriert sind, nach dem Übergang von dem inaktiven Zustand der RRC auf den angeschlossenen Zustand der RRC den einen oder die mehreren QoE-Messberichte, die während des inaktiven Zustand der RRCs gespeichert werden, zu übertragen.

7. Verfahren, das von einer Basisstation (1505) zum Messen und Melden einer Erlebnisqualität, QoE, ausgeführt wird, wobei die QoE-Messungen Messungen auf Anwendungsebene sind, die einer oder mehreren Dienstarten zugeordnet sind, wobei das Verfahren folgende Schritte umfasst:
Übertragen einer Funkressourcensteuerungs-, RRC, Nachricht, die eine oder mehrere QoE-Messkonfigurationen umfasst, wobei die eine oder mehreren QoE-Messkonfigurationen mindestens einen ersten QoE-Konfigurationsparameter, den ein Endgerät, UE, für die ersten QoE-Messungen in einem angeschlossenen Zustand der RRC verwenden soll, und mindestens einen zweiten QoE-Konfigurationsparameter, den das UE für die zweiten QoE-Messungen in einem inaktiven Zustand der RRC verwenden soll, umfassen;
Übertragen einer RRC-Freigabenachricht, die den Übergang des UEs von dem angeschlossenen Zustand der RRC auf den inaktiven Zustand der RRC angibt; und
Empfangen, nach dem Übergang des UEs von dem inaktiven Zustand der RRC auf den angeschlossenen Zustand der RRC, eines oder mehrerer QoE-Messberichte, die von dem UE während des inaktiven Zustand der RRCs gespeichert werden.

8. Basisstation (1505), die zum Messen und Melden einer Erlebnisqualität, QoE, konfiguriert ist, wobei die QoE-Messungen Messungen auf Anwendungsebene sind, die einer oder mehreren Dienstarten zugeordnet sind, wobei die Basisstation umfasst:
Übertragungsmittel, die dazu konfiguriert sind, eine Funkressourcensteuerungs-, RRC, Nachricht zu übertragen, die eine oder mehrere Erlebnisqualitäts-, (QoE), Messkonfigurationen umfasst, wobei die eine oder die mehreren QoE-Messkonfigurationen mindestens einen ersten QoE-Konfigurationsparameter, den ein Endgerät, UE, für die ersten QoE-Messungen in einem angeschlossenen Zustand der RRC verwenden soll, und mindestens einen zweiten QoE-Konfigurationsparameter, den das UE für die zweiten QoE-Messungen in einem inaktiven Zustand der RRC verwenden soll, umfassen;
wobei die Übertragungsmittel ferner dazu konfiguriert sind, eine RRC-Freigabenachricht zu übertragen, die den Übergang des UEs von dem angeschlossenen Zustand der RRC auf den inaktiven Zustand der RRC angibt; und
Empfangsmittel, die dazu konfiguriert sind, nach dem Übergang des UEs von dem inaktiven Zustand der RRC auf den angeschlossenen Zustand der RRC den einen oder die mehreren QoE-Messberichte zu empfangen, die von dem UE während des inaktiven Zustand der RRCs gespeichert werden.

## Revendications

1. Procédé mis en œuvre par un équipement utilisateur, UE, (1500) pour la mesure et le rapport de qualité d'expérience, QoE, dans lequel les mesures de QoE sont des mesures de couche application associées à un ou plusieurs types de services, le procédé comprenant les étapes suivantes :
recevoir un message de contrôle de ressources radio, RRC, comprenant une ou plusieurs configurations de mesure de QoE ;
dans un état RRC connecté, réaliser des premières mesures de QoE sur la base d'au moins un premier paramètre de configuration QoE des une ou plusieurs configurations de mesure de QoE ;
recevoir un message de libération RRC indiquant un passage de l'UE (1500) d'un état RRC connecté à un état RRC inactif ;
dans l'état RRC inactif, réaliser des deuxièmes mesures de QoE sur la base d'au moins un deuxième paramètre de configuration QoE des une ou plusieurs configurations de mesure de QoE ;
dans l'état RRC inactif, stocker un ou plusieurs rapports de mesure de QoE sur la base des deuxièmes mesures de QoE ;
déterminer de passer de l'état RRC inactif à l'état RRC connecté ; et
transmettre les un ou plusieurs rapports de mesure de QoE qui sont stockés au cours de l'état RRC inactif après le passage à l'état RRC connecté.

2. Procédé selon la revendication 1, comprenant en outre le passage de l'état RRC connecté à l'état RRC inactif en réponse à la réception du message de libération RRC.

3. Procédé selon la revendication 1 ou 2, dans lequel :
le message de libération RRC comprend un élément d'information, IE, *suspendconfig* ; et
l'IE *suspendconfig* comprend des paramètres de configuration pour le fonctionnement de l'UE (1500) dans l'état RRC inactif.

4. Procédé selon l'une des revendications 1 à 3, dans lequel :
la transmission des un ou plusieurs rapports de mesure de QoE s'effectue via un ou plusieurs messages RRC.

5. Procédé selon la revendication 4, dans lequel :
les un ou plusieurs messages RRC sont associées à un support radio de signalisation quatre, SRB4.

6. Équipement utilisateur, UE, (1500) configuré pour la mesure et le rapport de qualité d'expérience, QoE, dans lequel les mesures de QoE sont des mesures de couche application associées à un ou plusieurs types de services, l'UE comprenant :
des moyens de réception configurés pour recevoir un message de contrôle de ressources radio, RRC, comprenant une ou plusieurs configurations de mesure de QoE ;
des moyens de réalisation configurés pour, dans un état RRC connecté, réaliser des premières mesures de QoE sur la base d'au moins un premier paramètre de configuration QoE des une ou plusieurs configurations de mesure de QoE,
dans lequel les moyens de réception sont en outre configurés pour recevoir un message de libération RRC indiquant un passage de l'UE de l'état RRC connecté à l'état RRC inactif, et
dans lequel les moyens de réalisation sont en outre configurés pour, dans l'état RRC inactif, réaliser des deuxièmes mesures de QoE sur la base d'au moins un deuxième paramètre de configuration QoE des une ou plusieurs configurations de mesure de QoE ;
des moyens de stockage configurés pour, dans l'état RRC inactif, stocker un ou plusieurs rapports de mesure de QoE sur la base des deuxièmes mesures de QoE ;
des moyens de détermination configurés pour déterminer de passer de l'état RRC inactif à l'état RRC connecté ; et
des moyens de transmission configurés pour, après le passage de l'état RRC inactif à l'état RRC connecté, transmettre les un ou plusieurs rapports de mesure de QoE qui sont stockés au cours de l'état RRC inactif.

7. Procédé mis en œuvre par une station de base (1505) pour la mesure et le rapport de qualité d'expérience, QoE, dans lequel les mesures de QoE sont des mesures de couche application associées à un ou plusieurs types de services, le procédé comprenant les étapes suivantes :
transmettre un message de contrôle de ressources radio, RRC, comprenant une ou plusieurs configurations de mesure de QoE, les une ou plusieurs configurations de mesure de QoE comprenant au moins un premier paramètre de configuration QoE pour un équipement utilisateur, UE, destiné à être utilisé dans les premières mesures de QoE dans un état RRC connecté, et au moins un deuxième paramètre de configuration QoE pour l'UE destiné à être utilisé dans les deuxièmes mesures de QoE dans un état RRC inactif ;
transmettre un message de libération RRC indiquant un passage de l'UE de l'état RRC connecté à l'état RRC inactif ; et
après le passage de l'UE de l'état RRC inactif à l'état RRC connecté, recevoir un ou plusieurs rapports de mesure de QoE qui sont stockés par l'UE au cours de l'état RRC inactif.

8. Station de base (1505) configurée pour la mesure et le rapport de qualité d'expérience, QoE, dans laquelle les mesures de QoE sont des mesures de couche application associées à un ou plusieurs types de services, la station de base comprenant :
des moyens de transmission configurés pour transmettre un message de contrôle de ressources radio, RRC, comprenant une ou plusieurs configurations de mesure de qualité d'expérience, QoE, les une ou plusieurs configurations de mesure de QoE comprenant au moins un premier paramètre de configuration QoE pour un équipement utilisateur, UE, destiné à être utilisé dans les premières mesures de QoE dans un état RRC connecté, et au moins un deuxième paramètre de configuration QoE pour l'UE destiné à être utilisé dans les deuxièmes mesures de QoE dans un état RRC inactif ;
dans laquelle les moyens de transmission sont en outre configurés pour transmettre un message de libération RRC indiquant un passage de l'UE de l'état RRC connecté à l'état RRC inactif ; et
des moyens de réception configurés pour, après le passage de l'UE de l'état RRC inactif à l'état RRC connecté, recevoir les un ou plusieurs rapports de mesure de QoE qui sont stockés par l'UE au cours de l'état RRC inactif.
